# EUROPEAN PATENT APPLICATION

(11) **EP 4 839 004 A1**
(43) Date of publication of application: **11.11.2026**
(21) Application number: 25751608.8
(22) Date of filing: 06.02.2025
(51) Int. Cl.: H04W 76/27

(54) **CONFIGURATION METHOD FOR WIRELESS COMMUNICATION, DEVICE, AND STORAGE MEDIUM**

(30) Priority: 07.02.2024 CN 202410173902
(71) Applicant: Honor Device Co., Ltd., Shenzhen, Guangdong 518040 (CN)
(72) Inventor: ZHENG, Xiaoxiao, Shenzhen, Guangdong 518040 (CN)
(74) Representative: Henselmann, Alexander Gerhard
(86) International application number: PCT/CN2025/076057
(87) International publication number: WO 2025/168009

(57) **Abstract**

This application provides a wireless communication configuration method, a device, and a storage medium. The method includes: obtaining and saving conditional PSCell addition/change pre-configuration information; obtaining indication information; and retaining the conditional PSCell addition/change pre-configuration information based on the indication information when transitioning to a radio resource control inactive state. According to this application, if a terminal device still connects to this serving cell or a serving cell corresponding to the CPAC pre-configuration information next time, the terminal device may indicate to a network device and continue using the CPAC pre-configuration information, saving downlink signaling overheads, reducing interruption impact of state transition on data transmission and handover, and improving user experience.

## Description

This application claims priority to Chinese Patent Application No. 202410173902.9, filed with the China National Intellectual Property Administration on February 7, 2024 and entitled "WIRELESS COMMUNICATION CONFIGURATION METHOD, DEVICE, AND STORAGE MEDIUM", which is incorporated herein by reference in its entirety.

### TECHNICAL FIELD

This application relates to the field of communication technologies, and in particular, to a wireless communication configuration method, a device, and a storage medium.

### BACKGROUND

In a related technology, in a DC (Dual Connectivity, dual connectivity) scenario, when transitioning to an RRC (Radio Resource Control, radio resource control) inactive (RRC_INACTIVE) state, a terminal device releases corresponding CPAC (Conditional PSCell Addition/Change, conditional PSCell addition/change) pre-configuration information. In this case, when the terminal device transitions from RRC_INACTIVE to RRC_CONNECTED (radio resource control connected state), or when the terminal device performs a cell handover, a network device needs to re-deliver the CPAC pre-configuration information to the terminal device, resulting in heavy downlink signaling overheads, and causing interruption impact on data transmission and handover due to state transition.

### SUMMARY

Embodiments of this application provide a wireless communication configuration method, a device, and a storage medium, to avoid heavy downlink signaling overheads and reduce interruption impact of state transition on data transmission and handover.

According to a first aspect, an embodiment of this application provides a wireless communication configuration method. The method includes: obtaining and saving conditional PSCell addition/change pre-configuration information; obtaining indication information; and retaining the conditional PSCell addition/change pre-configuration information based on the indication information when transitioning to a radio resource control inactive state.

In an optional embodiment of the first aspect, the indication information is carried in a radio resource control release message.

In an optional embodiment of the first aspect, the radio resource control release message carries at least one of a timer, a cell identifier of a valid cell, and a RAN-based notification area list of a valid area. The timer is configured to indicate a validity period for the conditional PSCell addition/change pre-configuration information. The cell identifier of the valid cell and the RAN-based notification area list of the valid area are both configured to indicate an applicable cell for the conditional PSCell addition/change pre-configuration information.

In an optional embodiment of the first aspect, the method further includes: if the timer expires and/or a terminal device leaves a valid cell, removing the conditional PSCell addition/change pre-configuration information.

In an optional embodiment of the first aspect, the method further includes: when transitioning to a radio resource control idle state, removing the conditional PSCell addition/change pre-configuration information.

In an optional embodiment of the first aspect, the conditional PSCell addition/change pre-configuration information includes at least one of air interface resources of a candidate cell, non-access stratum signaling, master cell group configuration information, secondary cell group configuration information, measurement configuration information, a dedicated system information block, or an encryption parameter.

In an optional embodiment of the first aspect, the method further includes: sending first information to a network device, where the first information indicates that the conditional PSCell addition/change pre-configuration information is usable.

In an optional embodiment of the first aspect, the first information includes a terminal device identifier and/or a candidate cell identifier. The candidate cell identifier is a cell identifier of a candidate cell in the conditional PSCell addition/change.

In an optional embodiment of the first aspect, the first information is carried in a radio resource control resume request message.

In an optional embodiment of the first aspect, the radio resource control resume request message further carries a measurement report.

In an optional embodiment of the first aspect, a first serving cell that is used when the conditional PSCell addition/change pre-configuration information is saved is the same as a second serving cell that is used when the first information is sent; or
a first serving cell that is used when the conditional PSCell addition/change pre-configuration information is saved is different from a second serving cell that is used when the first information is sent.

In an optional embodiment of the first aspect, the second serving cell is a candidate cell in the conditional PSCell addition/change pre-configuration information, and sending the first information to the network device includes:
under a preset condition, applying the conditional PSCell addition/change pre-configuration information when sending the first information to the network device, where the preset condition includes that a current period is within the period specified by the timer, and/or the second serving cell is a valid cell.

In an optional embodiment of the first aspect, the method further includes:
obtaining second information, where the second information indicates a processing manner for the conditional PSCell addition/change pre-configuration information; and
processing the conditional PSCell addition/change pre-configuration information correspondingly based on the processing manner.

In an optional embodiment of the first aspect, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

According to a second aspect, an embodiment of this application provides a wireless communication configuration method. The method includes: obtaining first information, where the first information indicates that conditional PSCell addition/change pre-configuration information is usable.

In an optional embodiment of the second aspect, the first information is carried in a radio resource control resume request message.

In an optional embodiment of the second aspect, the first information includes a terminal device identifier and/or a candidate cell identifier. The candidate cell identifier is a cell identifier of a candidate cell in the conditional PSCell addition/change.

In an optional embodiment of the second aspect, the method further includes: obtaining the conditional PSCell addition/change pre-configuration information based on the terminal device identifier and/or the candidate cell identifier; and determining a processing manner for the conditional PSCell addition/change pre-configuration information, and indicating second information, where the second information indicates the processing manner for the conditional PSCell addition/change pre-configuration information.

In an optional embodiment of the second aspect, obtaining the conditional PSCell addition/change pre-configuration information includes: obtaining the conditional PSCell addition/change pre-configuration information from a source network device, where the source network device is a serving network device that configures a terminal device with the conditional PSCell addition/change configuration information.

In an optional embodiment of the second aspect, determining the processing manner for the conditional PSCell addition/change pre-configuration information includes: obtaining resource usage of a second serving cell and resource usage of a neighboring cell of the second serving cell, where the second serving cell is a cell to which the terminal device currently connects; obtaining a measurement report carried in the radio resource control resume request message; obtaining whether the terminal device needs to be configured with a dual connectivity scenario; and determining the processing manner for the conditional PSCell addition/change pre-configuration information based on the resource usage, the measurement report, and whether the terminal device needs to be configured with the dual connectivity scenario.

In an optional embodiment of the second aspect, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

According to a third aspect, an embodiment of this application provides a wireless communication configuration method. The method includes: obtaining indication information, where the indication information includes a terminal device identifier and/or a candidate cell identifier; retrieving conditional PSCell addition/change pre-configuration information corresponding to the terminal device identifier and/or the candidate cell identifier; obtaining validity information regarding configuration information of a candidate cell in the conditional PSCell addition/change pre-configuration information; updating the conditional PSCell addition/change pre-configuration information based on the validity information, to obtain updated conditional PSCell addition/change pre-configuration information; and sending reply information, where the reply information includes the conditional PSCell addition/change pre-configuration information or the updated conditional PSCell addition/change pre-configuration information.

In an optional embodiment of the third aspect, the indication information is carried in a terminal device context request message or another Xn interface message.

In an optional embodiment of the third aspect, the reply information is carried in a terminal device context response message or another Xn interface message.

In an optional embodiment of the third aspect, obtaining the validity information regarding the configuration information of the candidate cell in the conditional PSCell addition/change pre-configuration information includes: sending a first request message to another network device corresponding to a candidate cell, where the first request message is used to indicate to the another network device to determine validity information regarding configuration information of the candidate cell; and obtaining the validity information sent by the another network device.

In an optional embodiment of the third aspect, the validity information includes at least one of a cell identifier of a candidate cell with valid configuration information, a cell identifier of a candidate cell with unusable configuration information, and a cell identifier of a candidate cell whose configuration information needs to be updated in the conditional PSCell addition/change pre-configuration information.

In an optional embodiment of the third aspect, updating the conditional PSCell addition/change pre-configuration information based on the validity information, to obtain the updated conditional PSCell addition/change pre-configuration information, includes:
if the validity information indicates that configuration information of a candidate cell is unusable, removing the configuration information of the candidate cell in the conditional PSCell addition/change pre-configuration information;
if the validity information indicates that configuration information of a candidate cell is valid, continuing retaining the configuration information of the candidate cell in the conditional PSCell addition/change pre-configuration information; and
if the validity information indicates that configuration information of a candidate cell needs to be updated, continuing retaining the configuration information of the candidate cell in the conditional PSCell addition/change pre-configuration information, or removing the configuration information of the candidate cell in the conditional PSCell addition/change pre-configuration information.

In an optional embodiment of the third aspect, the method further includes:
adding pre-configuration information of a candidate cell to the conditional PSCell addition/change pre-configuration information based on a second serving cell and information about a neighboring cell of the second serving cell, where the second serving cell is a cell to which a terminal device currently connects.

According to a fourth aspect, an embodiment of this application provides a terminal device. The terminal device includes:
an obtaining module, configured to: obtain and save conditional PSCell addition/change pre-configuration information, and obtain indication information; and
a retaining module, configured to: retain the conditional PSCell addition/change pre-configuration information based on the indication information when transitioning to a radio resource control inactive state.

In an optional embodiment of the fourth aspect, the indication information is carried in a radio resource control release message.

In an optional embodiment of the fourth aspect, the radio resource control release message carries at least one of a timer, a cell identifier of a valid cell, and a RAN-based notification area list of a valid area. The timer is configured to indicate a validity period for the conditional PSCell addition/change pre-configuration information. The cell identifier of the valid cell and the RAN-based notification area list of the valid area are both configured to indicate an applicable cell for the conditional PSCell addition/change pre-configuration information.

In an optional embodiment of the fourth aspect, the terminal device further includes a removal module, configured to: if the timer expires and/or the terminal device leaves a valid cell, remove the conditional PSCell addition/change pre-configuration information.

In an optional embodiment of the fourth aspect, the terminal device further includes a removal module, configured to: when transitioning to a radio resource control idle state, remove the conditional PSCell addition/change pre-configuration information.

In an optional embodiment of the fourth aspect, the conditional PSCell addition/change pre-configuration information includes at least one of air interface resources of a candidate cell, non-access stratum signaling, master cell group configuration information, secondary cell group configuration information, measurement configuration information, a dedicated system information block, or an encryption parameter.

In an optional embodiment of the fourth aspect, the terminal device further includes a sending module, configured to: send first information to a network device, where the first information indicates that the conditional PSCell addition/change pre-configuration information is usable.

In an optional embodiment of the fourth aspect, the first information includes a terminal device identifier and/or a candidate cell identifier. The candidate cell identifier is a cell identifier of a candidate cell in the conditional PSCell addition/change.

In an optional embodiment of the fourth aspect, the first information is carried in a radio resource control resume request message.

In an optional embodiment of the fourth aspect, the radio resource control resume request message further carries a measurement report.

In an optional embodiment of the fourth aspect, a first serving cell that is used when the conditional PSCell addition/change pre-configuration information is saved is the same as a second serving cell that is used when the first information is sent; or
a first serving cell that is used when the conditional PSCell addition/change pre-configuration information is saved is different from a second serving cell that is used when the first information is sent.

In an optional embodiment of the fourth aspect, the second serving cell is a candidate cell in the conditional PSCell addition/change pre-configuration information, and the sending module is specifically configured to: under a preset condition, apply the conditional PSCell addition/change pre-configuration information when sending the first information to the network device, where the preset condition includes that a current period is within the period specified by the timer, and/or the second serving cell is a valid cell.

In an optional embodiment of the fourth aspect, the obtaining module is further configured to obtain second information, where the second information indicates a processing manner for the conditional PSCell addition/change pre-configuration information; and the terminal device further includes a processing module, configured to: process the conditional PSCell addition/change pre-configuration information correspondingly based on the processing manner.

In an optional embodiment of the fourth aspect, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

According to a fifth aspect, an embodiment of this application provides a network device. The network device includes an obtaining module, configured to: obtain first information, where the first information indicates that conditional PSCell addition/change pre-configuration information is usable.

In an optional embodiment of the fifth aspect, the first information is carried in a radio resource control resume request message.

In an optional embodiment of the fifth aspect, the first information includes a terminal device identifier and/or a candidate cell identifier. The candidate cell identifier is a cell identifier of a candidate cell in the conditional PSCell addition/change.

In an optional embodiment of the fifth aspect, the obtaining module is further configured to: obtain the conditional PSCell addition/change pre-configuration information based on the terminal device identifier and/or the candidate cell identifier; and the network device further includes a determining module, configured to: determine a processing manner for the conditional PSCell addition/change pre-configuration information, and indicate second information, where the second information indicates the processing manner for the conditional PSCell addition/change pre-configuration information.

In an optional embodiment of the fifth aspect, the obtaining module is specifically configured to obtain the conditional PSCell addition/change pre-configuration information from a source network device, where the source network device is a serving network device that configures a terminal device with the conditional PSCell addition/change configuration information.

In an optional embodiment of the fifth aspect, the determining module is specifically configured to: obtain resource usage of a second serving cell and resource usage of a neighboring cell of the second serving cell, where the second serving cell is a cell to which the terminal device currently connects; obtain a measurement report carried in the radio resource control resume request message; obtain whether the terminal device needs to be configured with a dual connectivity scenario; and determine the processing manner for the conditional PSCell addition/change pre-configuration information based on the resource usage, the measurement report, and whether the terminal device needs to be configured with the dual connectivity scenario.

In an optional embodiment of the fifth aspect, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

According to a sixth aspect, an embodiment of this application provides a network device. The network device includes:
a first obtaining module, configured to: obtain indication information, where the indication information includes a terminal device identifier and/or a candidate cell identifier;
a retrieval module, configured to: retrieve conditional PSCell addition/change pre-configuration information corresponding to the terminal device identifier and/or the candidate cell identifier;
a second obtaining module, configured to: obtain validity information regarding configuration information of a candidate cell in the conditional PSCell addition/change pre-configuration information;
an updating module, configured to: update the conditional PSCell addition/change pre-configuration information based on the validity information, to obtain updated conditional PSCell addition/change pre-configuration information; and
a sending module, configured to: send reply information, where the reply information includes the conditional PSCell addition/change pre-configuration information or the updated conditional PSCell addition/change pre-configuration information.

In an optional embodiment of the sixth aspect, the indication information is carried in a terminal device context request message or another Xn interface message.

In an optional embodiment of the sixth aspect, the reply information is carried in a terminal device context response message or another Xn interface message.

In an optional embodiment of the sixth aspect, the second obtaining module is specifically configured to: send a first request message to another network device corresponding to a candidate cell, where the first request message is used to indicate to the another network device to determine validity information regarding configuration information of the candidate cell; and obtain the validity information sent by the another network device.

In an optional embodiment of the sixth aspect, the validity information includes at least one of a cell identifier of a candidate cell with valid configuration information, a cell identifier of a candidate cell with unusable configuration information, and a cell identifier of a candidate cell whose configuration information needs to be updated in the conditional PSCell addition/change pre-configuration information.

In an optional embodiment of the sixth aspect, the updating module is specifically configured to:
if the validity information indicates that configuration information of a candidate cell is unusable, remove the configuration information of the candidate cell in the conditional PSCell addition/change pre-configuration information;
if the validity information indicates that configuration information of a candidate cell is valid, continue retaining the configuration information of the candidate cell in the conditional PSCell addition/change pre-configuration information; and
if the validity information indicates that configuration information of a candidate cell needs to be updated, continue retaining the configuration information of the candidate cell in the conditional PSCell addition/change pre-configuration information, or remove the configuration information of the candidate cell in the conditional PSCell addition/change pre-configuration information.

In an optional embodiment of the sixth aspect, the updating module is further configured to: add pre-configuration information of a candidate cell to the conditional PSCell addition/change pre-configuration information based on a second serving cell and information about a neighboring cell of the second serving cell, where the second serving cell is a cell to which a terminal device currently connects.

According to a seventh aspect, an embodiment of this application provides an electronic device. The electronic device includes a processor and a memory. The memory stores computer-executable instructions. The processor executes the computer-executable instructions stored in the memory, so that a network device performs the method according to the first aspect, the method according to the second aspect, or the method according to the third aspect.

According to an eighth aspect, an embodiment of this application provides a computer-readable storage medium. The computer-readable storage medium stores a computer program. When the computer program is executed by a processor, the method according to the first aspect, the method according to the second aspect, or the method according to the third aspect is implemented.

According to a ninth aspect, an embodiment of this application provides a computer program product. The computer program product includes a computer program. When the computer program is run, a computer is enabled to perform the method according to the first aspect, the method according to the second aspect, or the method according to the third aspect.

This application provides a wireless communication configuration method, a device, and a storage medium. In this application, the method includes: obtaining and saving the conditional PSCell addition/change pre-configuration information; obtaining the indication information; and retaining the conditional PSCell addition/change pre-configuration information based on the indication information when transitioning to the radio resource control inactive state. In this way, if the terminal device still connects to this serving cell or a serving cell corresponding to the CPAC pre-configuration information next time, the terminal device may indicate to the network device and continue using the CPAC pre-configuration information, saving downlink signaling overheads, reducing interruption impact of state transition on data transmission and handover, and improving user experience.

### BRIEF DESCRIPTION OF DRAWINGS

FIG. 1 is a diagram of an architecture of a communication system according to an embodiment of this application;
FIG. 2 is a diagram of a dual connectivity scenario according to an embodiment of this application;
FIG. 3A to FIG. 3C are diagrams of a cell handover procedure according to an embodiment of this application;
FIG. 4A and FIG. 4B are diagrams of an MN-triggered SN addition procedure according to an embodiment of this application;
FIG. 5 is a diagram of SN-controlled CPAC for a UE according to an embodiment of this application;
FIG. 6A to FIG. 6C are diagrams of an SN change procedure according to an embodiment of this application;
FIG. 7 is a flowchart 1 of steps of a wireless communication configuration method according to an embodiment of this application;
FIG. 8 is a diagram of a network device sending an RRC release message to a terminal device according to an embodiment of this application;
FIG. 9 is a diagram 1 of a wireless communication configuration method according to an embodiment of this application;
FIG. 10 is a diagram 2 of a wireless communication configuration method according to an embodiment of this application;
FIG. 11 is a flowchart 2 of steps of a wireless communication configuration method according to an embodiment of this application;
FIG. 12 is a diagram 3 of a wireless communication configuration method according to an embodiment of this application;
FIG. 13 is a diagram 4 of a wireless communication configuration method according to an embodiment of this application;
FIG. 14 is a diagram 5 of a wireless communication configuration method according to an embodiment of this application;
FIG. 15 is a diagram 6 of a wireless communication configuration method according to an embodiment of this application;
FIG. 16 is a flowchart 3 of steps of a wireless communication configuration method according to an embodiment of this application;
FIG. 17 is a block diagram of a structure of a terminal device according to an embodiment of this application;
FIG. 18 is a block diagram 1 of a structure of a network device according to an embodiment of this application;
FIG. 19 is a block diagram 2 of a structure of a network device according to an embodiment of this application; and
FIG. 20 is a diagram of a hardware structure of an electronic device according to an embodiment of this application.

### DESCRIPTION OF EMBODIMENTS

For a purpose of facilitating clear description of technical solutions in embodiments of this application, an expression such as "example" or "for example" is used to indicate providing an example, illustration, or explanation in embodiments of this application. Any embodiment or design solution described by using "example" or "for example" in this application should not be interpreted as being more preferred or advantageous than another embodiment or design solution. To be precise, use of the expression such as "example" or "for example" is intended to present a related concept in a specific manner.

In embodiments of this application, "at least one" means one or more, and "a plurality of" means two or more. "and/or" describes an association between associated objects, and indicates that three relationships may exist. For example, A and/or B may indicate the following cases: Only A exists, both A and B exist, and only B exists, where A and B may be singular or plural. The character "/" typically indicates an "or" relationship between associated objects. "at least one of the following items (pieces)" or a similar expression thereof indicates any combination of these items, including a single item (piece) or any combination of a plurality of items (pieces). For example, at least one of a, b, or c may indicate a, b, c, a-b, a-c, b-c, or a-b-c, where a, b, and c may be singular or plural.

It should be noted that "when" or "in a case in which" in embodiments of this application may indicate an instant at which a case occurs, or may indicate a period of time that follows after a case occurs. This is not specifically limited in embodiments of this application. In addition, a display interface provided in embodiments of this application is merely used as an example. The display interface may alternatively include more or less content.

The following first briefly describes terms used in embodiments of this application.

For a better understanding of an information indicating method provided in embodiments of this application, the following first describes an architecture of a communication system in embodiments of this application.

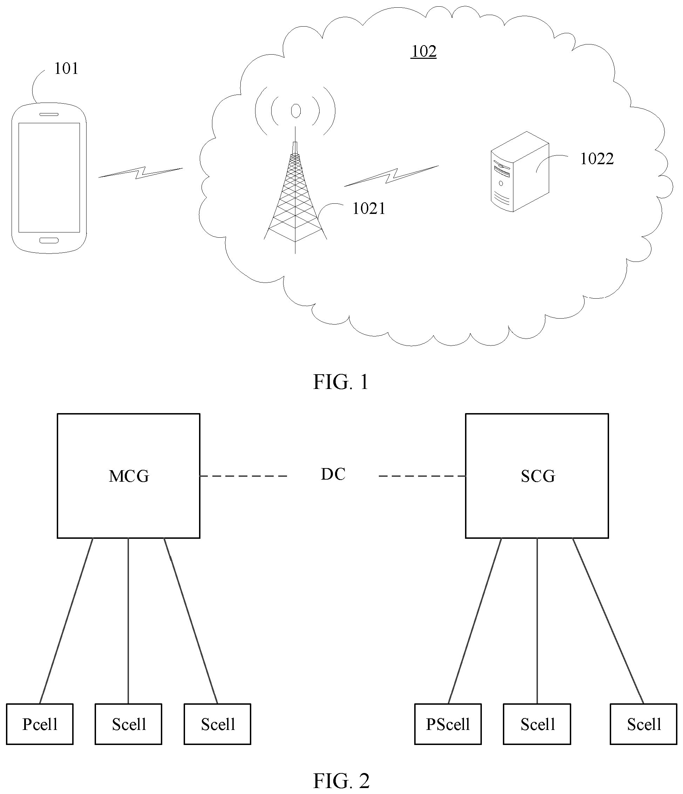

For example, FIG. 1 is a diagram of an architecture of a communication system according to an embodiment of this application. As shown in FIG. 1, the communication system 100 includes a terminal device 101 and a network device 102. The terminal device 101 communicates with the network device 102 wirelessly.

The terminal device used in this embodiment of this application may also be referred to as a terminal, and may be a device with wireless transmission and reception functions. The terminal device may be deployed on land, including indoors, outdoors, handheld, or vehicle-mounted, or on a water surface (for example, on a ship), or in the air (for example, on a plane, balloon, or satellite). The terminal device may be a user equipment (user equipment, UE). The UE includes a handheld device, vehicle-mounted device, wearable device, or compute device with wireless communication functionality. For example, the UE may be a mobile phone (mobile phone), a tablet computer, or a computer with wireless transmission and reception functions. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In this embodiment of this application, an apparatus configured to implement a function of the terminal may be a terminal; or may be an apparatus that can support the terminal implementing the function, for example, a chip system, where the apparatus may be installed in the terminal.

The network device 102 used in this embodiment of this application includes an access network device 1021 and a core network device 1022.

The access network (radio access network, RAN) device is an intermediate device via which the terminal connects to the core network device in a wireless manner, and is mainly responsible for air interface-side radio resource management, quality of service (quality of service, QoS) management, data compression and encryption, and the like, for example, a base station (NodeB), an evolved base station (eNodeB), a base station in a 5G mobile communication system or new radio (new radio, NR) communication system, or a base station in a future mobile communication system.

The core network (core network, CN) device includes a user plane function (user plane function, UPF) network element, an access and mobility management function (access and mobility management function, AMF) network element, a session management function (session management function, SMF) network element, a policy control function (policy control function, PCF) network element, and the like. The UPF network element is mainly responsible for transmission of user data. The other network elements may be referred to as control plane function network elements, mainly responsible for authentication, authorization, registration management, session management, mobility management, policy control, and the like, to guarantee reliable and stable transmission of user data.

In this embodiment of this application, an apparatus configured to implement a function of the network device may be a network device; or may be an apparatus that can support the network device implementing the function, for example, a chip system, where the apparatus may be installed in the network device.

The technical solutions provided in embodiments of this application may be used in a long term evolution (Long Term Evolution, LTE) architecture, a universal mobile telecommunications system (Universal Mobile Telecommunications System, UMTS) terrestrial radio access network (UMTS Terrestrial Radio Access Network, UTRAN) architecture, or a global system for mobile communication (Global System for Mobile Communication, GSM)/enhanced data rate for GSM evolution (Enhanced Data Rate for GSM Evolution, EDGE) system's radio access network (GSM EDGE Radio Access Network, GERAN) architecture. In addition, the technical solutions provided in embodiments of this application may be used in any other wireless communication systems with a similar structure and functions, for example, a public land mobile network (Public Land Mobile Network, PLMN) system, a 5G communication system, or a beyond-5G communication system. This is not limited in this embodiment of this application.

Wireless communication between communication devices may include wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission". Persons skilled in the art may use the technical solutions provided in embodiments of this application for wireless communication between a network device and a terminal, for example, wireless communication between an access network device and a terminal, and wireless communication between a core network device and a terminal.

An application scenario of embodiments of this application is a dual connectivity (DC, Dual Connectivity) scenario shown in FIG. 2. In FIG. 2, there is an MCG (Master cell group, master cell group), an SCG (Secondary cell group, secondary cell group), a Pcell (Primary cell, primary cell), a PScell (Primary Secondary cell, primary secondary cell), and an Scell (Secondary cell, secondary cell).

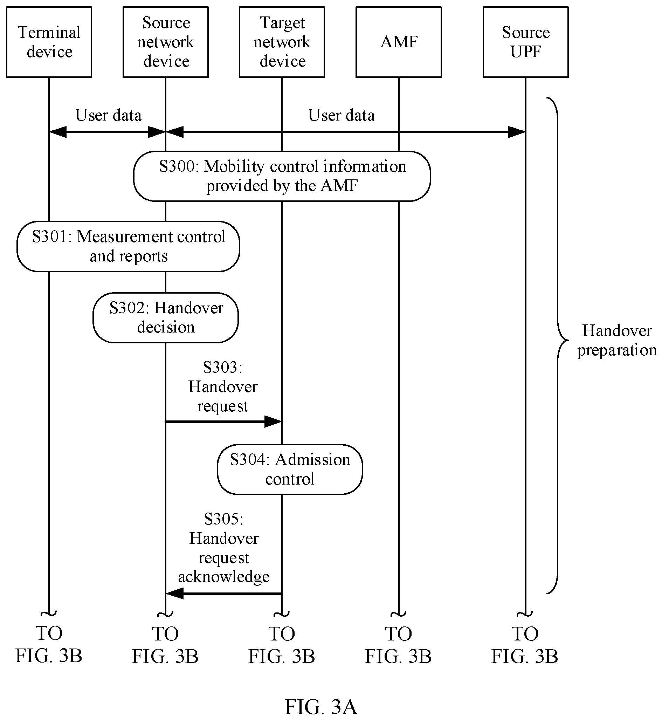

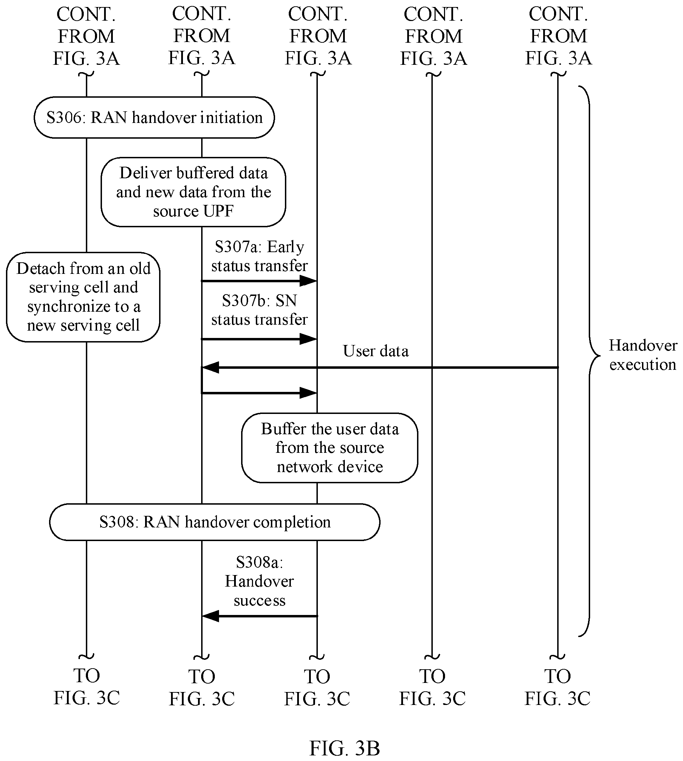

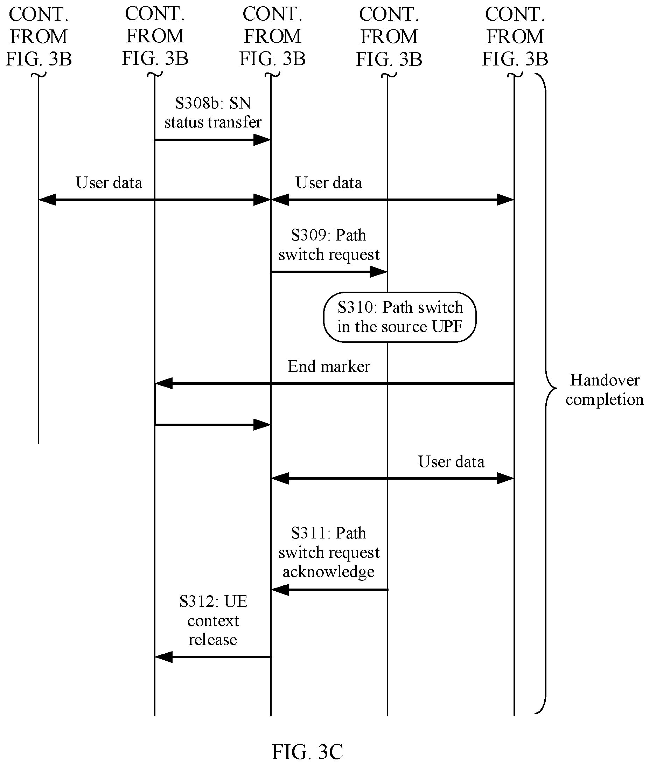

Further, for a terminal device connected to a network device and in RRC_IDLE (radio resource control idle state), when quality of a radio link of a current serving cell is poor, or there is a neighboring serving cell with better quality of service, or the network device to which the terminal device currently connects needs to perform load balancing, the terminal device triggers a handover, to perform a serving cell handover. An entire handover procedure includes three phases: handover preparation, handover execution, and handover completion. For the specific handover procedure, refer to FIG. 3A to FIG. 3C. The handover procedure includes the following steps.

S300: Mobility control information provided by an AMF.

Before S300, prior to a cell handover, user data is transmitted between a terminal device and a source network device and between the source network device and a source UPF (User Plane Function, user plane function).

Specifically, S300 indicates that the AMF provides mobility control information to the source network device and a target network device.

S301: Measurement control and reports.

The terminal device sends measurement control and reports to the source network device.

S302: Handover decision.

The source network device determines, based on the measurement control and reports, whether to perform a serving cell handover. If a serving cell handover needs to be performed, the source network device determines a target network device in a target cell.

S303: Handover request.

After determining to perform a serving cell handover for the terminal device, the source network device sends a handover request to the target network device.

S304: Admission control.

The target network device determines whether to allow a serving cell handover for the terminal device.

S305: Handover request acknowledge.

When allowing a serving cell handover for the terminal device, the target network device sends a handover request acknowledge to the source network device, to indicate to the source network device that a handover is allowed.

S300 to S305 belong to a handover preparation phase. After the handover preparation is completed, a subsequent handover execution process is performed.

S306: RAN handover initiation.

The terminal device and the source network device both initiate a RAN handover. Then, the source network device delivers buffered data and new data from the source UPF (User Plane Function, user plane function), and the terminal device detaches from an old serving cell and synchronizes to a new serving cell.

S307a: Early status transfer.

S307b: SN status transfer.

Then, user data from the source UPF is delivered to the target network device via the source network device. Further, the target network device buffers the user data from the source network device.

S308: RAN handover completion.

S308 includes: S308a: Handover success, and S308b: SN status transfer.

In this embodiment of this application, S306 to S308 belong to the handover execution process.

S309: Path switch request.

The target network device sends a path switch request to the AMF.

S310: Path switch in the source UPF.

After receiving the path switch request, the AMF performs path switch in the source UPF.

After completing path switch, the source UPF sends an end marker to the target network device via the source network device. In addition, the target network device is configured with user data.

S311: Path switch request acknowledge.

After completing path switch, the AMF sends a path switch request acknowledge to the target network device.

S312: UE context release.

After implementing path switch, the target network device indicates to the source network device to release a UE context.

It can be learned that S309 to S312 belong to a handover completion process.

In this embodiment of this application, after the procedure shown in FIG. 3A to FIG. 3C is performed, the terminal device can implement the serving cell handover.

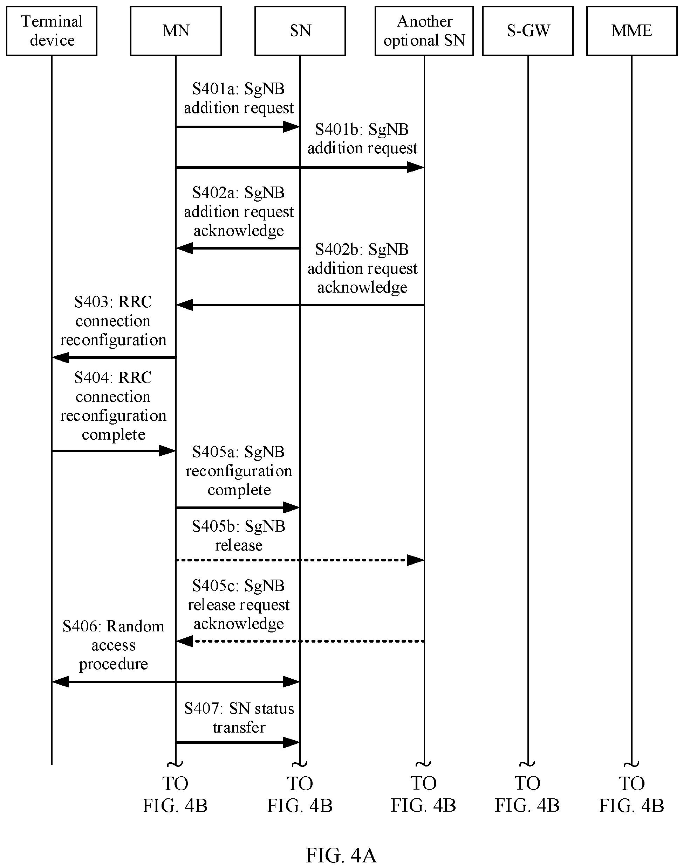

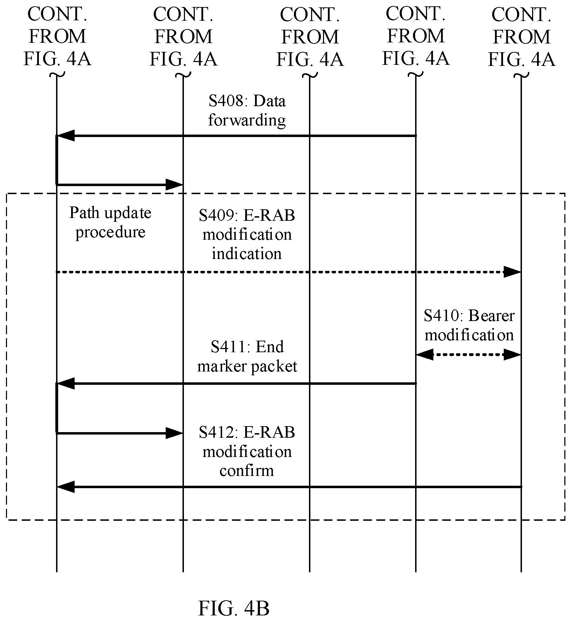

In embodiments of this application, CPAC occurs in a dual connectivity scenario. Therefore, both a primary cell handover and CPAC also need to be considered. For example, FIG. 4A and FIG. 4B show a conditional SN (Secondary Node, secondary node) addition procedure triggered by an MN (Master Node, master node). The procedure specifically includes the following steps.

S401a: SgNB addition request.

When a terminal device needs to connect to a network device to go online, the terminal device first connects to a master node, and then a secondary node is added as needed. The master node, also referred to as an "anchor", is responsible for interacting with a control plane of a core network. A plurality of cells within a master node are referred to as a master cell group (MCG), and correspondingly, a plurality of cells within a secondary node are referred to as a secondary cell group (SCG).

Specifically, SgNB represents a secondary base station. The master node sends an SgNB addition request to an SN. The SgNB addition request adds the SN.

S401b: SgNB addition request.

The master node sends an SgNB addition request to another optional SN. The SgNB addition request is used to request to add the another optional SN.

S402a: SgNB addition request acknowledge.

The SN sends an SgNB addition request acknowledge to the MN.

S402b: SgNB addition request acknowledge.

The another optional SN sends an SgNB addition request acknowledge to the MN.

S403: RRC connection reconfiguration.

The MN sends an RRC connection reconfiguration to the terminal device.

Further, the RRC connection reconfiguration includes an MN RRC connection configuration and an SN RRC reconfiguration. The RRC connection reconfiguration is used to indicate to the terminal device to reconfigure an RRC connection.

S404: RRC connection reconfiguration complete.

After completing RRC connection reconfiguration, the terminal device sends an RRC connection reconfiguration complete to the MN.

Further, the RRC connection reconfiguration complete includes an SN RRC reconfiguration complete.

S405a: SgNB reconfiguration complete.

The MN sends an SgNB reconfiguration complete to the SN.

S405b: SgNB release.

The MN sends an SgNB release to the another optional SN.

Further, the SgNB release is used to indicate to the another optional SN to release a related context.

S405c: SgNB release request acknowledge.

After releasing the related context, the another optional SN replies to the MN with an SgNB release request acknowledge.

S406: Random access procedure.

S407: SN status transfer.

The SN status transfer is used for changing the SN to be a secondary base station of the terminal device.

S408: Data forwarding.

In a path update procedure, an S-GW forwards related data to the newly added SN.

In this embodiment of this application, the S-GW (Serving GateWay, serving gateway) is a gateway terminated at an E-UTRAN interface.

S409: E-RAB modification indication.

In the path update procedure, the MN sends an E-RAB modification indication to an MME.

In this embodiment of this application, the MME (Mobility Management Entity, mobility management entity) is a key control node of an LTE access network that complies with 3GPP protocols, responsible for locating and paging procedures for UEs (User Equipments) in idle mode, including relay UEs. Simply put, the MME is responsible for a signaling processing part.

Further, an E-RAB (Evolved Radio Access Bearer, evolved radio access bearer) is a user plane bearer, configured for transporting voice, data, and multimedia services between the terminal device and the CN (Core Network, core network). The E-RAB modification indication sent by the MN to the MME is used to indicate to the MME to modify an E-RAB to the SN.

S410: Bearer modification.

Bearer modification is performed between the S-GW and the MME.

S411: End marker packet.

After changing to be a secondary base station finishes, the S-GW sends an end marker packet to the SN, to inform the SN that changing to be a secondary base station is completed.

S412: E-RAB modification confirm.

After modifying the E-RAB, the MME sends an E-RAB modification confirm to the MN.

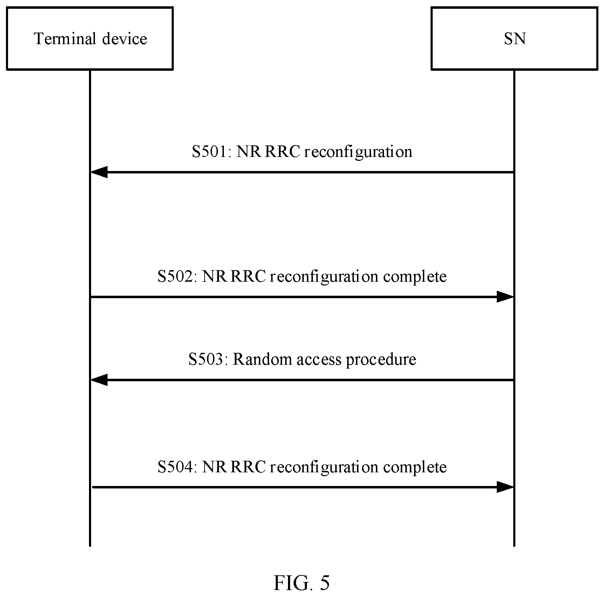

FIG. 5 shows CPAC triggered by an SN, with an SRB3 (an SRB defined in 3GPP TS 38.331) established between the SN and a UE. An SRB (Signaling Radio Bearer, signaling radio bearer) may configure a terminal device with CPAC pre-configuration information via the SRB3. When a configuration condition in the pre-configuration information is fulfilled, the UE connects to, based on the pre-configuration, a candidate cell associated with associated pre-configuration information, not requiring MN involvement. FIG. 5 shows SN-controlled CPAC (Conditional PSCell Change, conditional PSCell change) for the UE. The CPAC specifically includes the following steps.

S501: NR RRC reconfiguration.

The secondary base station sends an NR RRC reconfiguration to the terminal device, with the NR RRC reconfiguration carrying the CPAC pre-configuration information.

S502: NR RRC reconfiguration complete.

The terminal device configures the CPAC pre-configuration information. After completing the configuration, the terminal device sends an NR RRC reconfiguration complete to the SN.

S503: Random access procedure.

S504: NR RRC reconfiguration complete.

After completing the configuration of the CPAC pre-configuration information, the terminal device sends an NR RRC reconfiguration complete to the SN.

It can be learned that, in FIG. 5, without MN involvement, the CPAC pre-configuration information may be sent to the terminal device by the SN, implementing the configuration of the CPAC pre-configuration information.

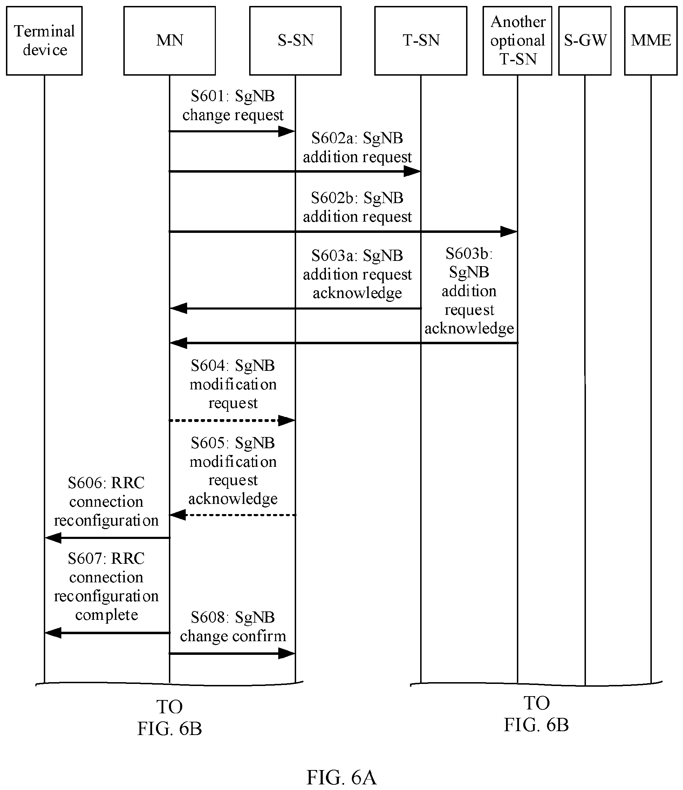

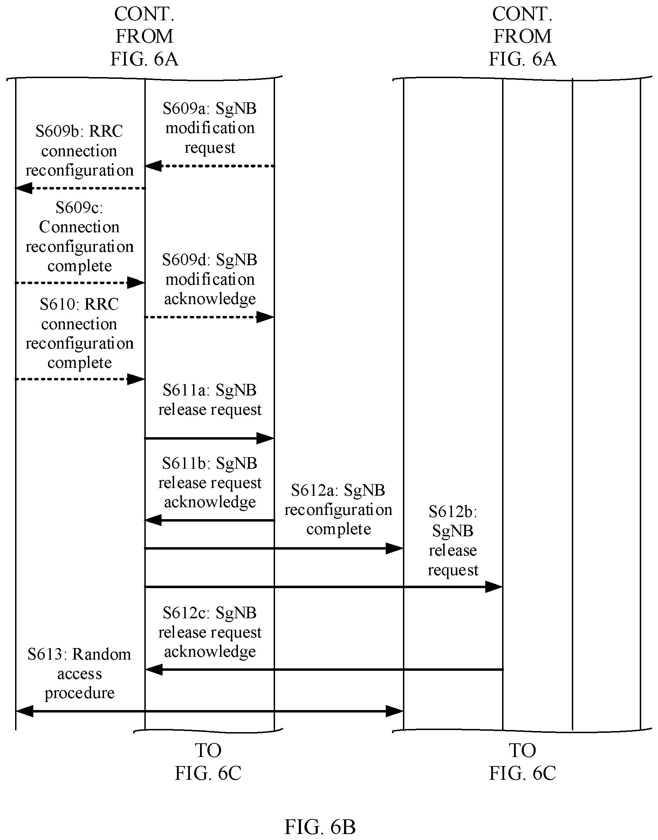

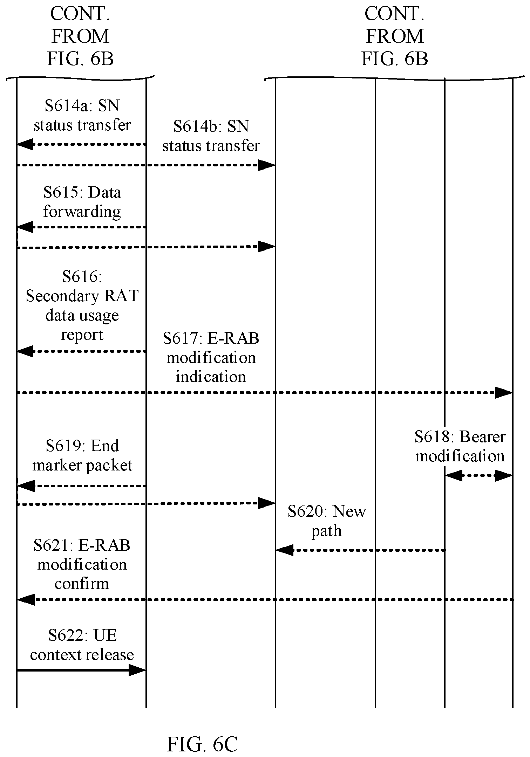

FIG. 6A to FIG. 6C show an SN change procedure. The procedure specifically includes the following steps.

S601: SgNB change request.

First, an MN sends, to an S-SN (source secondary node), an SgNB change request, used to request to change the SgNB.

S602a: SgNB addition request.

The MN sends, to a T-SN (target secondary node), an SgNB addition request, used to request to change the T-SN to be a new SgNB.

S602b: SgNB addition request.

The MN sends, to another optional T-SN, an SgNB addition request, used to request to change the another optional T-SN to be a new SgNB.

S603a: SgNB addition request acknowledge.

The T-SN replies to the MN with an SgNB addition request acknowledge.

S603b: SgNB addition request acknowledge.

The another optional T-SN replies to the MN with an SgNB addition request acknowledge.

S604: SgNB modification request.

First, the MN sends, to the S-SN, an SgNB modification request, used to request to modify the SgNB.

S605: SgNB modification request acknowledge.

The S-SN sends an SgNB modification request acknowledge to the SgNB.

S606: RRC connection reconfiguration.

The MN sends an RRC connection reconfiguration to a terminal device.

The RRC connection reconfiguration includes an MN RRC connection reconfiguration and a T-SN RRC reconfiguration, and may also include an S-SN RRC reconfiguration. The T-SN is a target secondary node of the change, and the S-SN is the source secondary node to be changed.

S607: RRC connection reconfiguration complete.

The RRC connection reconfiguration complete includes an S-SN RRC reconfiguration complete.

S608: SgNB change confirm.

S609a: SgNB modification request.

The S-SN sends an SgNB modification request to the MN.

S609b: RRC connection reconfiguration.

The MN sends an RRC connection reconfiguration to the terminal device.

The RRC connection reconfiguration includes an MN RRC connection reconfiguration and a T-SN RRC reconfiguration, and may include an S-SN RRC reconfiguration.

S609c: RRC connection reconfiguration complete.

The RRC connection reconfiguration complete may include an S-SN RRC reconfiguration complete.

S609d: SgNB modification acknowledge.

The MN sends an SgNB modification acknowledge to the S-SN.

S610: RRC connection reconfiguration complete.

The RRC connection reconfiguration complete includes a T-SN RRC reconfiguration complete.

S611a: SgNB release request.

After receiving the RRC connection reconfiguration complete sent by the terminal device, the MN sends an SgNB release request to the S-SN, to request the S-SN to release related information.

S611b: SgNB release request acknowledge.

After releasing the related information, the S-SN sends an SgNB release request acknowledge to the MN.

S612a: SgNB reconfiguration complete.

The MN sends an SgNB reconfiguration complete to the T-SN.

S612b: SgNB release request.

The MN sends, to the another optional T-SN, an SgNB release request, used to indicate to the another optional T-SN to release related information.

S612c: SgNB release request acknowledge.

After releasing the related information, the another optional T-SN replies to the MN with an SgNB release request acknowledge.

S613: Random access procedure.

S614a: SN status transfer.

S614b: SN status transfer.

S615: Data forwarding.

S616: Secondary RAT data usage report.

The S-SN sends a secondary RAT (radio access technology, radio access technology) data usage report to the MN.

S617: E-RAB modification indication.

S618: Bearer modification.

S619: End marker packet.

S620: New path.

S621: E-RAB modification confirm.

S622: UE context release.

In FIG. 6A to FIG. 6C, the procedure is performed to implement the SN change. In the SN change procedure, the RRC connection reconfiguration is sent to the terminal device. The RRC connection reconfiguration carries CPAC pre-configuration information, used for the terminal device to apply the CPAC pre-configuration information for communication.

Further, in a new radio-dual connectivity (NR-DC) scenario, the CPAC pre-configuration information received by the terminal device includes two independent conditional reconfigurations. One is a conditional reconfiguration associated with an MCG, and the conditional reconfiguration is included in an RRC reconfiguration message received via an SRB1. The other is a conditional reconfiguration associated with an SCG, and the conditional reconfiguration is included in an RRC reconfiguration message received via an SRB3, or, alternatively, included within an RRC reconfiguration message embedded in an RRC reconfiguration message received via an SRB1. The CPAC pre-configuration information is added to condreconfig of a network device.

Currently, in the following three cases, the terminal device removes the CPAC pre-configuration information delivered by the network device.
(1) A UE completes one CPAC procedure.

Specifically, CPAC is defined as PSCell addition/change performed by a terminal when an execution condition is fulfilled. Upon receiving CPAC pre-configuration information, a terminal device begins to evaluate an execution condition. Once PSCell addition or PCell change is triggered, the terminal device stops evaluating an execution condition and then removes the CPAC pre-configuration information.

Further, the following principles are applicable to CPAC:
The CPAC pre-configuration information includes a configuration of a candidate PSCell, an execution condition of the candidate PSCell, or MCG configuration information, applied when CPAC execution is triggered, of the candidate PSCell. In addition, one execution condition may include one or two trigger conditions. Only one RS (communication interface) type and a maximum of two different trigger quantities may be used for evaluating an execution condition for a single candidate PSCell. Further, before any execution condition for CPAC is fulfilled, upon receiving a PSCell addition command or a PCell change command, the terminal device performs a PSCell addition procedure in the standard or a PCell change procedure in the standard, regardless of any CPAC pre-configuration information previously received. Upon successful completion of the PSCell addition procedure or the PCell change procedure, the UE releases the stored pre-configuration information. When performing CPAC, the UE does not need to continue evaluating an execution condition for another candidate PSCell or PCell. Once CPAC is successfully executed, the UE releases all the stored CPAC pre-configuration information.

In the conventional technology, the CPAC pre-configuration information does not support being included in an HO (Handover, handover) command, a PSCell addition command, or any conditional reconfiguration.

(2) A UE transitions to an RRC_INACTIVE state or RRC_IDLE state.

Specifically, when an RRC release message received by a terminal device from a network device carries suspendConfig information or when a terminal device enters an RRC_IDLE state, the terminal device removes all CPAC pre-configuration information.

(3) When an SCG is released, pre-configuration information corresponding to the SCG in CPAC pre-configuration information is removed.

In an (NG) EN-DC scenario or NR-DC scenario, because a release of an SCG is triggered by E-UTRA, all pre-configuration information corresponding to the SCG in SCG VarConditionalReconfig (space for storing pre-configuration information) is removed. In an NR-DC scenario, because a release of an SCG is triggered by NR, RRC Reconfig in condRRCReconfig (RRC reconfiguration) in MCG VarConditionalReconfig is removed, with all entries of an MCG with reconfigurationWithSync (reconfigurationWithSync) not removed. Further, in an EN-DC scenario, CPAC pre-configuration information is removed unconditionally as specified in TS 36.331 [10] in the standard.

In conclusion, a concept of CPAC is introduced in Rel-17 study. Currently, in a dual connectivity (DC) scenario, CPAC is usually triggered due to a change in a service status or channel quality. When CPAC execution is determined due to a change in a service status or channel quality, a source master node (S-MN) initiates a CPAC request and a related configuration information request to a target master node (T-MN). Then, the S-MN configures a terminal device with a plurality of candidate PScells (primary secondary cells) and corresponding trigger conditions. The terminal device evaluates a trigger condition. After determining that at least one PScell fulfills a condition, the terminal device initiates a RACH (Random Access Channel, random access channel) to a determined PScell (primary secondary cell), to complete CPAC. It can be learned that currently, when the terminal device transitions from RRC_INACTIVE to RRC_CONNECTED, or when the terminal device performs a cell handover, a network device needs to re-deliver CPAC pre-configuration information to the terminal device, resulting in heavy downlink signaling overheads, and causing interruption impact on data transmission and handover due to state transition.

To resolve the foregoing problem, an embodiment of this application provides a wireless communication configuration method. A main inventive concept of the method is as follows: obtaining and saving conditional PSCell addition/change pre-configuration information; obtaining indication information; and retaining the conditional PSCell addition/change pre-configuration information based on the indication information when transitioning to a radio resource control inactive state. In this way, if a terminal device still connects to this serving cell or a serving cell corresponding to the CPAC pre-configuration information next time, the terminal device may indicate to a network device and continue using the CPAC pre-configuration information, saving downlink signaling overheads, reducing interruption impact of state transition on data transmission and handover, and improving user experience.

By using specific embodiments, the following describes in detail the technical solutions disclosed in this application. It should be noted that the following several embodiments may exist alone or may be combined with each other. For contents that are the same or similar, for example, explanations of terms or nouns, and explanations of steps, reference may be made to each other in different embodiments, and details are not described again.

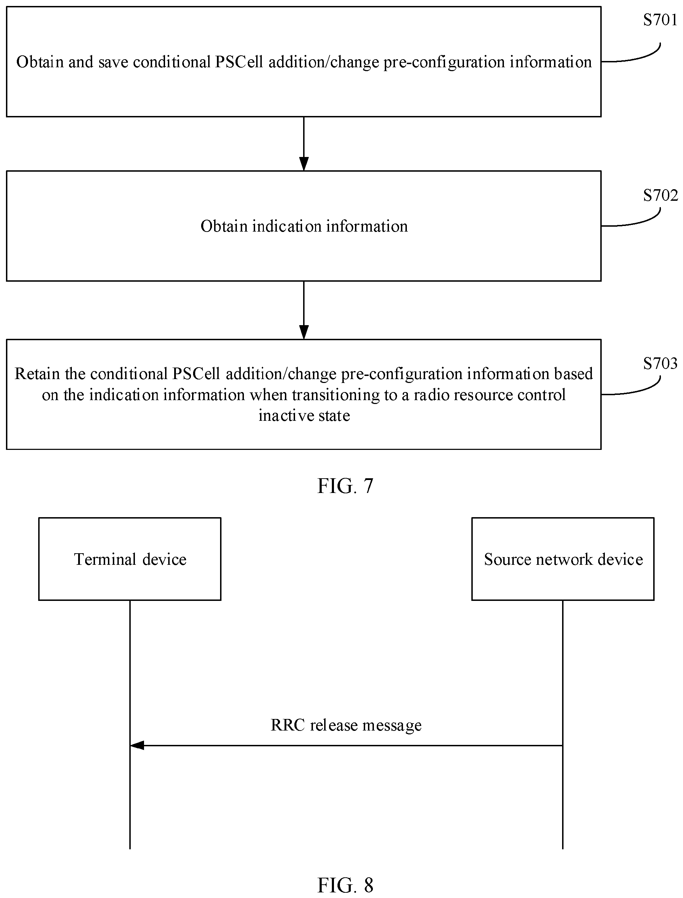

FIG. 7 is a diagram 1 of a wireless communication configuration method according to an embodiment of this application. As shown in FIG. 7, the wireless communication configuration method provided in this embodiment is used on a terminal device. The wireless communication configuration method includes the following steps.

S701: Obtain and save conditional PSCell addition/change pre-configuration information.

In conclusion, the CPAC pre-configuration information may be delivered by an SN to a terminal device via an SRB3 established between the SN and the terminal device, or the CPAC pre-configuration information may be forwarded by an SN to an MN, and then delivered by the MN to a terminal device via an SRB3 established between the MN and the terminal device. In addition, specific configuration information is delivered via a "condreconfig (network handover configuration profile)" IE (information element, information element). After receiving the CPAC pre-configuration information, the terminal device saves the CPAC pre-configuration information.

In conclusion, with reference to FIG. 4A to FIG. 6C, the MN or SN sends an RRC connection reconfiguration to the terminal device. The RRC connection reconfiguration carries the CPAC pre-configuration information.

After receiving the CPAC pre-configuration information, the terminal device saves the CPAC pre-configuration information into a VarConditionalReconfig variable.

In this embodiment of this application, the CPAC pre-configuration information includes at least one of air interface resources of a candidate cell, non-access stratum signaling (NAS signaling), master cell group (MCG) configuration information, secondary cell group (SCG) configuration information, measurement configuration information, a dedicated system information block (System Information Block, SIB for short), or an encryption parameter. In the CPAC pre-configuration information, information of a maximum of eight candidate primary secondary cells can be pre-configured, and a maximum of two measurement events can be configured. A candidate cell is a neighboring cell of a serving cell to which the terminal device connects when obtaining and saving the CPAC pre-configuration information, and is a cell to which the terminal device may be handed over.

The air interface resources of the candidate cell include one or more of the following: one or more of time-frequency resources and parameter configurations of PDCCH (Physical Downlink Control Channel, physical downlink control channel)/PUCCH (Physical Uplink Control Channel, physical uplink control channel)/PDSCH (Physical Downlink Shared Channel, physical downlink shared channel)/PUSCH (Physical Uplink Shared Channel, physical uplink shared channel) physical channels for uplink and downlink data transmission, target cell measurements of L1 and/or L3 measurements performed by a UE, pilot time-frequency resources, a TCI (Transmission Control Interface, transmission control interface) status, a measurement reporting periodicity, measurement reporting events and corresponding parameters, or measurement quantities for reporting. The dedicated system information block includes one or more of corresponding SB (Scheduling Block, scheduling block) time-frequency resources, or a broadcast RNTI (Radio Network Temporary Identifier, radio network temporary identifier). The encryption parameter includes one or more of an encryption algorithm or an initialization parameter.

In this embodiment of this application, the terminal device receives, in a first serving cell, the CPAC pre-configuration information sent by a source network device, and then saves the CPAC pre-configuration information.

S702: Obtain indication information.

The indication information is carried in a radio resource control release message. With reference to FIG. 8, the RRC release message is delivered by the source network device, used to indicate to the terminal device to transition to an RRC_INACTIVE state. Then, the terminal device transitions to the RRC_INACTIVE state, and continues retaining the CPAC pre-configuration information in the VarConditionalReconfig variable.

Further, the radio resource control release message carries at least one of a timer, a cell identifier of a valid cell, and a RAN-based notification area list of a valid area. The timer is configured to indicate a validity period for the conditional PSCell addition/change pre-configuration information. The cell identifier of the valid cell and the RAN-based notification area list of the valid area are both configured to indicate an applicable cell for the conditional PSCell addition/change pre-configuration information.

The method further includes: if the timer expires and/or the terminal device leaves a valid cell, removing the conditional PSCell addition/change pre-configuration information.

The method further includes: when transitioning to a radio resource control idle state, removing the conditional PSCell addition/change pre-configuration information.

Specifically, the timer is configured to indicate a validity period for the saved CPAC pre-configuration information. For example, if the timer is set for one hour, the saved CPAC pre-configuration information is valid within one hour. When a time limit of the timer is exceeded, the terminal device removes the saved CPAC pre-configuration information. In addition, the cell identifier of the valid cell is configured to indicate an applicable cell for the saved CPAC pre-configuration information. For example, if the cell identifiers are a cell 1, a cell 3, and a cell 5, the terminal device can use the saved CPAC pre-configuration information only when connecting to the cell 1, the cell 3, or the cell 5, and cannot use the saved CPAC pre-configuration information when connecting to a cell that is not the cell 1, the cell 3, or the cell 5. In addition, after leaving these valid cells, the terminal device also removes the saved CPAC pre-configuration information. The RAN-based notification area list includes a plurality of RNAs. The CPAC pre-configuration information can be applied only when the terminal device connects to a cell that is in the plurality of RNAs.

If the radio resource control release message carries a timer, the terminal device starts the timer upon receiving the radio resource control release message.

Further, before the timer expires, if the terminal device connects to the first serving cell or a candidate cell in the CPAC pre-configuration information, the terminal device may perform related configuration based on the CPAC pre-configuration information.

S703: Retain the conditional PSCell addition/change pre-configuration information based on the indication information when transitioning to the radio resource control inactive state.

The indication information sent by the source network device indicates to the terminal device to transition from RRC_CONNECTED to RRC_INACTIVE, and to continue retaining the CPAC pre-configuration information.

In this embodiment of this application, after retaining the conditional PSCell addition/change pre-configuration information, the method further includes: sending first information to a network device. The first information indicates that the conditional PSCell addition/change pre-configuration information is usable. The first information includes a terminal device identifier and/or a candidate cell identifier. The candidate cell identifier is a cell identifier of a candidate cell in the conditional PSCell addition/change.

In an optional embodiment, the first information is carried in a RAN-based notification area update message. If the terminal device needs to update an RNA, the terminal device sends an RNAU (RAN-based Notification Area Update, RAN-based notification area update) message to the network device, and adds the first information to the RNAU message, with the first information indicating to the network device that the terminal device stores the CPAC pre-configuration information.

In an optional embodiment, a radio resource control resume request message further carries a measurement report. The measurement report is obtained in advance by the terminal device based on the saved CPAC pre-configuration information.

Further, the method further includes: obtaining second information, where the second information indicates a processing manner for the conditional PSCell addition/change pre-configuration information; and processing the conditional PSCell addition/change pre-configuration information correspondingly based on the processing manner.

The processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

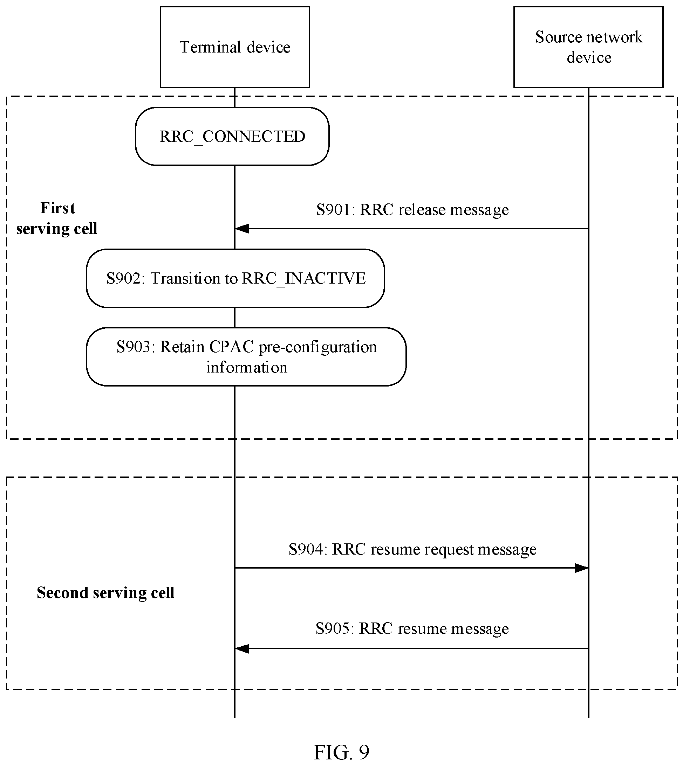

In an example 1, with reference to FIG. 9, the terminal device sends, in a second serving cell, an RRC resume request message to the source network device. The RRC resume request message carries the first information. The second serving cell and the first serving cell are the same cell or different cells. The second serving cell is a cell served by the source network device. In FIG. 9, the following steps are specifically included.

S901: RRC release message.

When the terminal device is in the first serving cell, the terminal device performs S701 to S703.

In this embodiment of this application, when being in RRC_CONNECTED, the terminal device receives the RRC release message sent by the source network device. The RRC release message carries 1-bit indication information, indicating to the terminal device to transition to RRC_INACTIVE and retain the CPAC pre-configuration information.

S902: Transition to RRC_INACTIVE.

The terminal device transitions from RRC_CONNECTED to RRC_INACTIVE based on the indication information in the RRC release message.

S903: Retain the CPAC pre-configuration information.

The terminal device continues retaining the CPAC pre-configuration information, as indicated by the indication information.

S904: RRC resume request message.

In an optional embodiment, the terminal device connects to this cell (the second serving cell and the first serving cell are the same cell), or connects to another cell served by the same source network device (the second serving cell and the first serving cell are not the same cell), and sends an RRC resume request message to the source network device. The RRC resume request message carries first information. The first information indicates that the CPAC pre-configuration information is usable, that is, the terminal device stores the CPAC pre-configuration information. The first information includes a terminal device identifier and/or a candidate cell identifier. The candidate cell identifier is a cell identifier of a candidate cell in the CPAC pre-configuration information.

S905: RRC resume message.

The terminal device receives an RRC resume message sent by the source network device. The RRC resume message carries second information. Further, the second information indicates a processing manner for the CPAC pre-configuration information. The terminal device may process the CPAC pre-configuration information correspondingly based on the processing manner.

In FIG. 9, the second serving cell and the first serving cell correspond to the same network device, that is, the source network device.

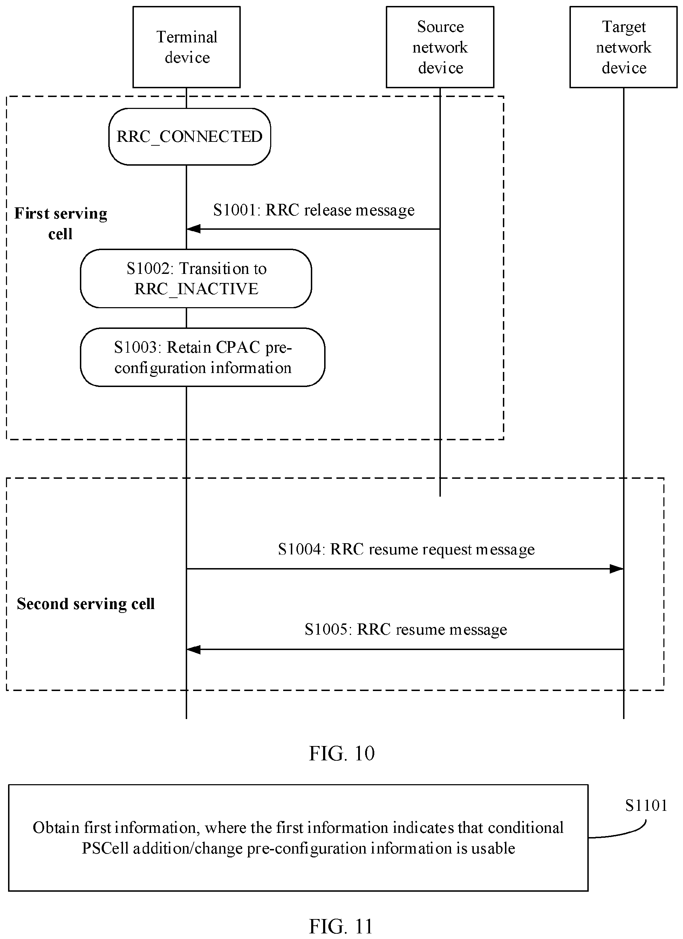

In an optional embodiment, with reference to FIG. 10, the terminal device sends, in a second serving cell, an RRC resume request message to a target network device. The second serving cell is a cell served by the target network device. The RRC resume request message carries the first information. The second serving cell and the first serving cell are different cells. The target network device is different from the source network device. In FIG. 8, the following steps are specifically included.

S1001: RRC release message.

S1002: Transition to RRC_INACTIVE.

S1003: Retain the CPAC pre-configuration information.

For S1001 to S1003, refer to S1001 to S1003. Details are not described herein again.

S1004: RRC resume request message.

S1005: RRC resume message.

S1004 and S1005 are interaction between the terminal device and the target network device. For other content, refer to S904 to S905. Details are not described herein again.

Further, in this embodiment of this application, the processing manner includes one of retaining the CPAC pre-configuration information, removing the CPAC pre-configuration information, updating the CPAC pre-configuration information, or adding CPAC pre-configuration information.

Specifically, retaining the CPAC pre-configuration information means that the CPAC pre-configuration information is usable, and the terminal device may continue retaining the CPAC pre-configuration information. Removing the CPAC pre-configuration information means that the CPAC pre-configuration information is unusable, and the terminal device removes the stored CPAC pre-configuration information and reconfigures new CPAC pre-configuration information. Updating the CPAC pre-configuration information means that part of the CPAC pre-configuration information stored in the terminal device is usable while part is unusable, and the terminal device retains the usable part of the CPAC pre-configuration information and replaces the unusable part of the CPAC pre-configuration information. Adding CPAC pre-configuration information means that the terminal device adds some pre-configuration information to the original CPAC pre-configuration information.

In this embodiment of this application, the terminal device may perform measurement in advance based on the CPAC pre-configuration information, to obtain a measurement report. When the terminal device performs a state transition (for example, transitions from RRC_INACTIVE to RRC_CONNECTED), the terminal device may send the measurement report to the network device, quickly guaranteeing mobility performance of the terminal device after the state transition, and reducing a longer interruption delay caused by the state transition of the terminal device.

According to this application, if the terminal device still connects to this serving cell or a serving cell corresponding to the CPAC pre-configuration information next time, the terminal device may indicate to the network device and continue using the CPAC pre-configuration information, saving downlink signaling overheads, reducing interruption impact of state transition on data transmission and handover, and improving user experience.

FIG. 11 shows a wireless communication configuration method, used on a network device. The network device is a network device to which a terminal device connects in a second serving cell. The method includes the following step:
S1101: Obtain first information, where the first information indicates that conditional PSCell addition/change pre-configuration information is usable.

The first information is carried in a radio resource control resume request message.

The first information includes a terminal device identifier and/or a candidate cell identifier. The candidate cell identifier is a cell identifier of a candidate cell in the conditional PSCell addition/change.

The method further includes: obtaining the conditional PSCell addition/change pre-configuration information based on the terminal device identifier and/or the candidate cell identifier; and determining a processing manner for the conditional PSCell addition/change pre-configuration information, and indicating second information, where the second information indicates the processing manner for the conditional PSCell addition/change pre-configuration information.

In this embodiment of this application, obtaining the conditional PSCell addition/change pre-configuration information includes: obtaining the conditional PSCell addition/change pre-configuration information from a source network device. The source network device is a serving network device that configures the terminal device with the conditional PSCell addition/change configuration information.

Determining the processing manner for the conditional PSCell addition/change pre-configuration information includes: obtaining resource usage of the second serving cell and resource usage of a neighboring cell of the second serving cell, where the second serving cell is a cell to which the terminal device currently connects; obtaining a measurement report carried in the radio resource control resume request message; obtaining whether the terminal device needs to be configured with a dual connectivity scenario; and determining the processing manner for the conditional PSCell addition/change pre-configuration information based on the resource usage, the measurement report, and whether the terminal device needs to be configured with the dual connectivity scenario.

Further, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

Specifically, the resource usage includes usage of physical resources, a user load, and processing resource capabilities. The source network device determines, based on the resource usage, whether there is a need to continue reserving resources of the candidate cell in the CPAC pre-configuration information for a target user.

Further, the second information may be one-bit indication information. The indication information being 0 indicates to remove the CPAC pre-configuration information, and the indication information being 1 indicates to continue retaining the CPAC pre-configuration information. Alternatively, the second information may be two-bit indication information. The indication information being 00 indicates removal. The indication information being 01 indicates subsequent reconfiguration (updating). The indication information being 11 indicates continuing retaining or re-delivering a set of new CPAC pre-configuration information. A candidate cell identifier is used as an index. If a candidate cell identifier in the new configuration matches an identifier in the previously retained candidate cell configuration information, the network device checks for new configuration information. If there is new configuration information, the network device overwrites the retained original configuration with the new configuration information; or if there is no new configuration information, the network device continues retaining the original configuration information. If a candidate cell identifier in the new configuration information does not match any candidate cell identifier previously saved, the network device saves the new configuration information. If a previously saved candidate cell does not match any candidate cell identifier in the new configuration information, the network device removes configuration information corresponding to the candidate cell.

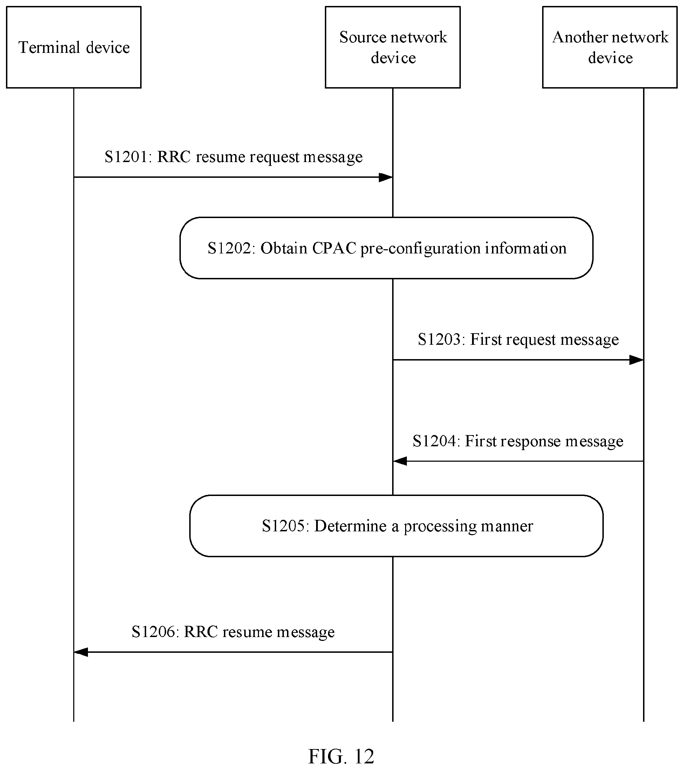

For example, when S1101 is performed by a source network device, refer to FIG. 12. In FIG. 12, a terminal device connects to a first serving cell in which the terminal device saves CPAC pre-configuration information (that is, a second serving cell and the first serving cell are the same cell). An interaction process includes the following steps.

S1201: RRC resume request message.

The source network device receives an RRC resume request message from the terminal device. The RRC resume request message carries first information. The first information includes a terminal device identifier and/or a candidate cell identifier.

S1202: Obtain the CPAC pre-configuration information.

Based on the terminal device identifier and/or the candidate cell identifier, the source network device obtains the corresponding CPAC pre-configuration information locally (in the source network device).

S1203: First request message.

The source network device sends a first request message to another network device corresponding to a candidate cell, where the first request message is used to indicate to the another network device to determine validity information regarding configuration information of the candidate cell; and then obtain the validity information sent by the another network device.

In FIG. 12, the another network device is a network device corresponding to a candidate cell in the CPAC pre-configuration information. The source network device sends a first request message to the another network device. The first request message is used to request the another network device to determine validity information regarding the candidate cell. The validity information includes at least one of a cell identifier of a candidate cell with valid configuration information, a cell identifier of a candidate cell with unusable configuration information, and a cell identifier of a candidate cell whose configuration information needs to be updated in the CPAC pre-configuration information.

S1204: First response message.

The source network device receives a first response message sent by the another network device. The first response message carries the validity information.

S1205: Determine a processing manner.

First, the source network device updates the CPAC pre-configuration information based on the validity information, to obtain updated CPAC pre-configuration information. A specific updating manner is as follows: if the validity information indicates that configuration information of a candidate cell is unusable, removing the configuration information of the candidate cell in the CPAC pre-configuration information; if the validity information indicates that configuration information of a candidate cell is valid, continuing retaining the configuration information of the candidate cell in the CPAC pre-configuration information; and if the validity information indicates that configuration information of a candidate cell needs to be updated, continuing retaining the configuration information of the candidate cell in the CPAC pre-configuration information, or removing the configuration information of the candidate cell in the CPAC pre-configuration information.

In addition, the source network device further obtains resource usage of the second serving cell and resource usage of a neighboring cell of the second serving cell, where the second serving cell is a cell to which the terminal device currently connects; obtains a measurement report carried in the radio resource control resume request message; and determines the processing manner for the CPAC pre-configuration information based on the resource usage, the measurement report, and whether the terminal device is in a dual connectivity scenario.

S1206: RRC resume message.

Then, the source network device sends an RRC resume message to the terminal device. The RRC resume message carries second information. The second information indicates a manner in which the terminal device processes the CPAC pre-configuration information.

In FIG. 12, it is the source network device that interacts with the terminal device, updates the CPAC pre-configuration information, and determines the processing manner for the CPAC pre-configuration information.

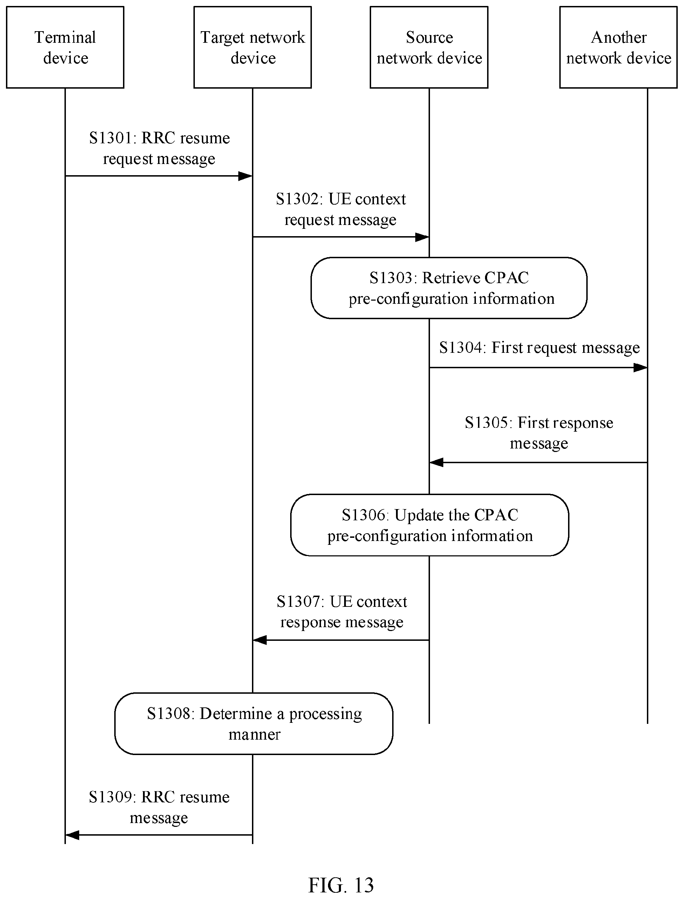

For another example, when S1101 is performed by a target network device, refer to FIG. 13. The following steps are included.

S1301: RRC resume request message.

The target network device receives an RRC resume request message from a terminal device. The RRC resume request message carries first information. The first information includes a terminal device identifier and/or a candidate cell identifier.

S1302: UE context request message.

The target network device determines a source network device based on the terminal device identifier and/or the candidate cell identifier, and then sends a UE context request message to the source network device. The UE context request message carries indication information. The indication information is used to indicate to the source network device to obtain CPAC pre-configuration information. The indication information includes the terminal device identifier and/or the candidate cell identifier.

S1303: Retrieve the CPAC pre-configuration information.

Based on the terminal device identifier and/or the candidate cell identifier, the source network device retrieves the corresponding CPAC pre-configuration information from the source network device.

S1304: First request message.

Another network device is a network device corresponding to a candidate cell in the CPAC pre-configuration information. The source network device sends a first request message to the another network device. The source network device sends a first request message to the another network device. The first request message is used to request the another network device to determine validity information regarding the candidate cell.

S1305: First response message.

The source network device receives a first response message sent by the another network device. The first response message carries the validity information.

S1306: Update the CPAC pre-configuration information.

The source network device updates the CPAC pre-configuration information based on the validity information, to obtain updated CPAC pre-configuration information. A specific updating manner is as follows: if the validity information indicates that configuration information of a candidate cell is unusable, removing the configuration information of the candidate cell in the CPAC pre-configuration information; if the validity information indicates that configuration information of a candidate cell is valid, continuing retaining the configuration information of the candidate cell in the CPAC pre-configuration information; and if the validity information indicates that configuration information of a candidate cell needs to be updated, continuing retaining the CPAC pre-configuration information.

Further, pre-configuration information of a candidate cell is added to the conditional PSCell addition/change pre-configuration information based on a second serving cell and information about a neighboring cell of the second serving cell. The second serving cell is a cell to which the terminal device currently connects.

It may be understood that the added configuration information of the candidate cell is candidate cell configuration information that does not exist in the original LTM configuration information. For example, the terminal device already saves candidate cell pre-configuration information corresponding to a cell 1, a cell 2, a cell 3, and a cell 4, and a cell 5 and a cell 6 further need to be configured as neighboring cells of the second serving cell in which the terminal device is located. In this case, pre-configuration information of the cell 5 may be added as candidate cell pre-configuration information.

S1307: UE context response message.

The source network device sends a UE context response message to the target network device. The UE context response message carries the updated CPAC pre-configuration information.

S1308: Determine a processing manner.

The target network device determines the processing manner for the CPAC pre-configuration information based on the updated CPAC pre-configuration information, resource usage, a measurement report, and whether the terminal device is in a dual connectivity scenario.

S1309: RRC resume message.

Then, the target network device sends an RRC resume message to the terminal device. The RRC resume message carries second information. The second information indicates a manner in which the terminal device processes the CPAC pre-configuration information.

In FIG. 13, the target network device interacts with the terminal device, the source network device updates the CPAC pre-configuration information, and the target network device determines the processing manner for the CPAC pre-configuration information.

In addition, alternatively, the target network device may obtain the CPAC pre-configuration information and the validity information from the source network device, and then update the CPAC pre-configuration information based on the validity information.

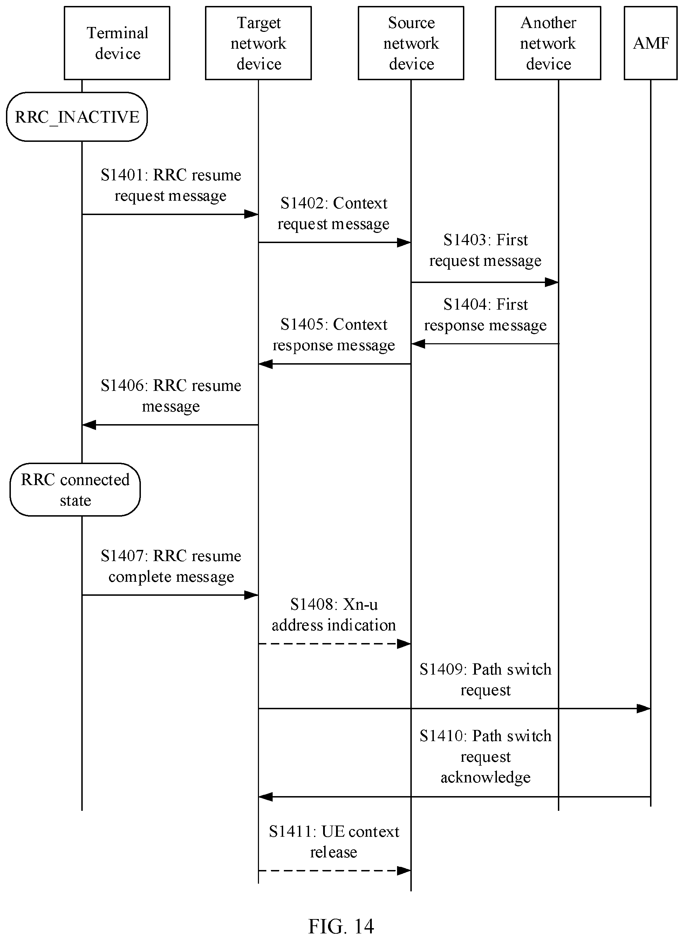

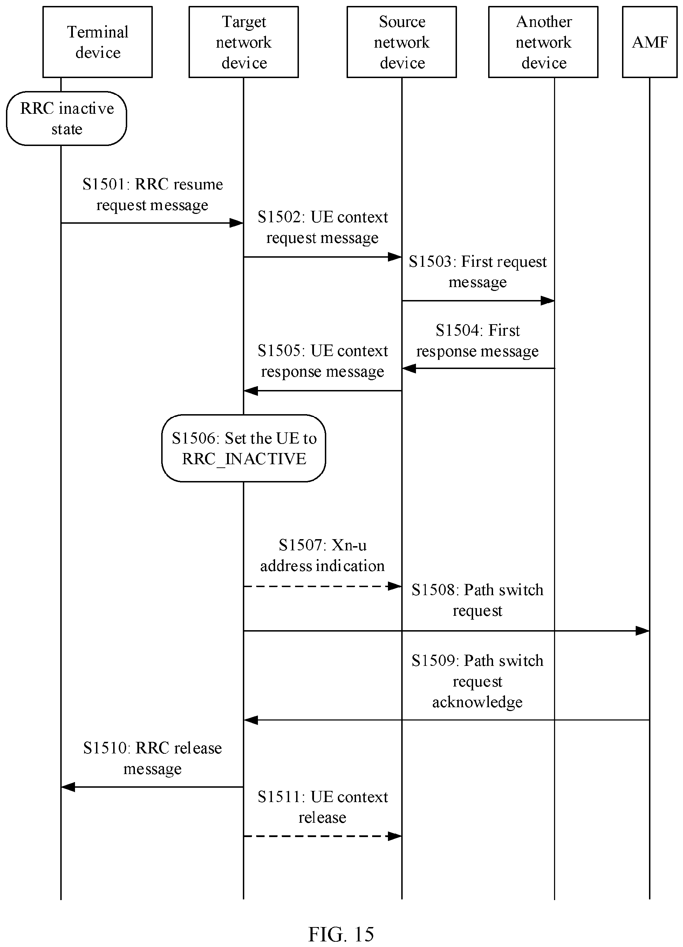

In an embodiment, when S1101 is performed by a target network device, there are two cases, and reference may be made to FIG. 14 and FIG. 15. In FIG. 14, the following steps are specifically included.

S1401: RRC resume request message.

When a terminal device is in RRC_INACTIVE and there is data to be transmitted, the terminal device sends an RRC resume request message to the target network device.

S1402: UE context request message.

S1403: First request message.

S1404: First response message.

S1405: UE context response message.

S1406: RRC resume message.

For a specific implementation process of S1401 to S1406, refer to S1301 to S1309. Details are not described herein again.

S1407: RRC resume complete message.

After processing CPAC pre-configuration information, the terminal device transitions to an RRC connected state, and then sends an RRC resume complete message to the target network device.

S1408: Xn-u address indication.

After receiving the radio resource control resume complete message from the terminal device, the target network device sends an Xn-u address indication to a source network device, so that the source network device connects to an AMF based on an Xn-u address.

S1409: Path switch request.

S1410: Path switch request acknowledge.

S1409 and S1410 implement path switch for data transmission.

S1411: UE context release.

The target network device sends a UE context release to the source network device, to indicate to the source network device to release a UE context.

When a terminal device performs RNA updating, the following steps are specifically included in FIG. 15.

S1501: RRC resume request message.

S1502: UE context request message.

S1503: First request message.

S1504: First response message.

S1505: UE context response message.

For a specific implementation process of S1501 to S1505, refer to S1301 to S1307. Details are not described herein again.

S1506: Set the UE to RRC_INACTIVE.

In FIG. 15, the terminal device sends the RRC resume request message to a target network device in the case of RNA updating. In this case, the terminal device does not need to perform data transmission. Therefore, the target network device sets the terminal device to the RRC inactive state.

S1507: Xn-u address indication.

S1508: Path switch request.

S1509: Path switch request acknowledge.

For S1507 to S1509, refer to S1408 to S1410. Details are not described herein again.

S1510: RRC release message.

In this embodiment of this application, the RRC release message carries a processing manner for CPAC pre-configuration information. After receiving the RRC release message, the terminal device processes the CPAC pre-configuration information based on the processing manner, for example, continues retaining the CPAC pre-configuration information, updates the CPAC pre-configuration information, removes the stored CPAC pre-configuration information and then reconfigures new CPAC pre-configuration information.

Further, after receiving the RRC release message, the terminal device still remains in the RRC inactive state.

S1511: UE context release.

In an optional embodiment, if the terminal device needs to perform RNA updating, for example, if the terminal device needs to perform RNA updating when a timer does not expire or an RNA change occurs, first information is carried in an RNAU (RAN-based Notification Area Update, RAN-based notification area update) message. The terminal device sends an RNAU message to the target network device, to notify the target network device that the terminal device stores CPAC pre-configuration information and the target network device may optionally update or remove the CPAC pre-configuration information.

Further, when transitioning to RRC_IDLE, the terminal device removes the CPAC pre-configuration information.

According to this application, if the terminal device still connects to this serving cell or a serving cell corresponding to the CPAC pre-configuration information next time, the terminal device may indicate to the network device and continue using the CPAC pre-configuration information, saving downlink signaling overheads, reducing interruption impact of state transition on data transmission and handover, and improving user experience.

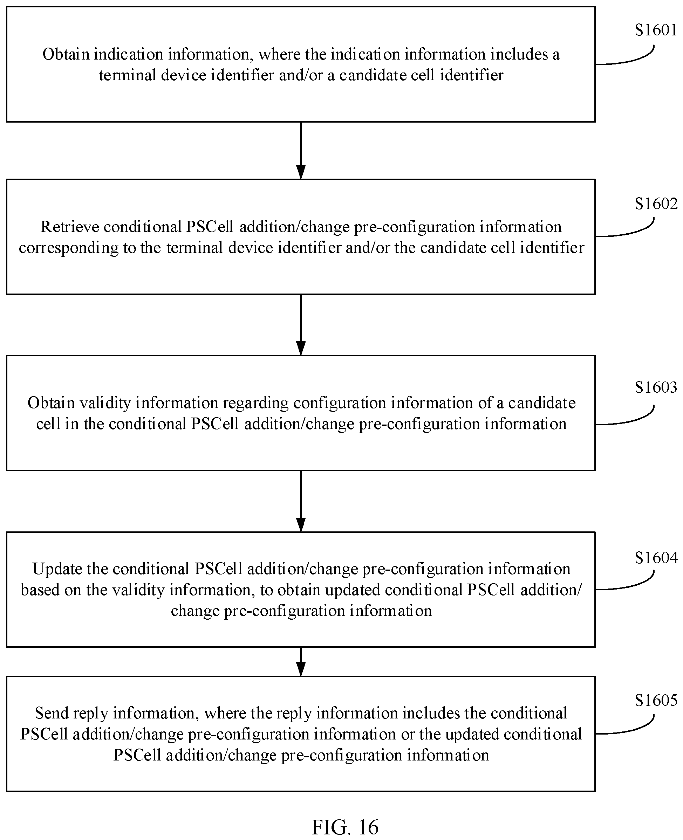

With reference to FIG. 16, a wireless communication configuration method is further provided. The wireless communication configuration method is performed by the source network device in the scenario in FIG. 11, and specifically includes the following steps.

S161: Obtain indication information, where the indication information includes a terminal device identifier and/or a candidate cell identifier.

The indication information is carried in a terminal device context request message or another Xn interface message.

With reference to FIG. 13 and FIG. 15, the indication information is carried in the UE context request message sent by the target network device to the source network device. Besides, the indication information may be alternatively carried in an Xn interface message sent by the target network device to the source network device.

S162: Retrieve conditional PSCell addition/change pre-configuration information corresponding to the terminal device identifier and/or the candidate cell identifier.

The source network device may retrieve the CPAC pre-configuration information in the source network device.

S163: Obtain validity information regarding configuration information of a candidate cell in the conditional PSCell addition/change pre-configuration information.

Obtaining the validity information regarding the configuration information of the candidate cell in the conditional PSCell addition/change pre-configuration information includes: sending a first request message to another network device corresponding to a candidate cell, where the first request message is used to indicate to the another network device to determine validity information regarding configuration information of the candidate cell; and obtaining the validity information sent by the another network device.

Specifically, the source network device needs to determine the validity information regarding the configuration information of the candidate cell with the another network device corresponding to the candidate cell. The validity information includes validity of the configuration information of the candidate cell and whether the configuration information of the candidate cell needs to be updated. Further, the configuration information of the candidate cell is configuration information related to the candidate cell in the CPAC pre-configuration information.

For example, eight candidate cells are configured in the CPAC pre-configuration information, which are a candidate cell 1 to a candidate cell 8. A network device serving the candidate cell 1, the candidate cell 2, and the candidate cell 3 is another network device a; a network device serving the candidate cell 4, the candidate cell 5, and the candidate cell 6 is another network device b; and a network device serving the candidate cell 7 and the candidate cell 8 is another network device c.

Further, the validity information includes at least one of a cell identifier of a candidate cell with valid configuration information, a cell identifier of a candidate cell with unusable configuration information, and a cell identifier of a candidate cell whose configuration information needs to be updated in the conditional PSCell addition/change pre-configuration information.

Specifically, with reference to FIG. 11 to FIG. 13, the source network device sends, to the another network device a, a first request message carrying cell identifiers and configuration information that are of the candidate cell 1, the candidate cell 2, and the candidate cell 3, so that the another network device a determines respective validity information for the candidate cell 1, the candidate cell 2, and the candidate cell 3, where the validity information is carried in a first response message and returned to the source network device. The source network device sends, to the another network device b, a first request message carrying cell identifiers and configuration information that are of the candidate cell 4, the candidate cell 5, and the candidate cell 6, so that the another network device b determines respective validity information for the candidate cell 4, the candidate cell 5, and the candidate cell 6, where the validity information is carried in a first response message and returned to the source network device. The source network device sends, to the another network device c, a first request message carrying cell identifiers and configuration information that are of the candidate cell 7 and the candidate cell 8, so that the another network device c determines respective validity information for the candidate cell 7 and the candidate cell 8, where the validity information is carried in a first response message and returned to the source network device. In this way, the source network device can obtain the validity information of each candidate cell.

S164: Update the conditional PSCell addition/change pre-configuration information based on the validity information, to obtain updated conditional PSCell addition/change pre-configuration information.

In addition, in an optional embodiment, if the validity information indicates that configuration information of a candidate cell is unusable, the source network device removes the configuration information of the candidate cell in the CPAC pre-configuration information, and records a cell identifier of the candidate cell. For example, if configuration information of a candidate cell 3 is unusable, the source network device removes the configuration information of the candidate cell 3 in the CPAC pre-configuration information, and records a cell identifier of the candidate cell 3.

In another optional embodiment, if the validity information indicates that configuration information of a candidate cell is valid, the source network device continues retaining the configuration information of the candidate cell in the CPAC pre-configuration information. For example, if configuration information of a candidate cell 1, configuration information of a candidate cell 2, configuration information of a candidate cell 5, and configuration information of a candidate cell 7 are valid, the source network device retains the configuration information of the candidate cell 1, the configuration information of the candidate cell 2, the configuration information of the candidate cell 5, and the configuration information of the candidate cell 7 in the CPAC pre-configuration information.

In still another optional embodiment, if the validity information indicates that configuration information of a candidate cell needs to be updated, the source network device continues retaining the configuration information of the candidate cell in the CPAC pre-configuration information, or removes the configuration information of the candidate cell in the CPAC pre-configuration information and records cell identifiers of these removed candidate cells. For example, if configuration information of a candidate cell 4, configuration information of a candidate cell 6, and configuration information of a candidate cell 8 need to be updated, the source network device retains the configuration information of the candidate cell 4, the configuration information of the candidate cell 6, and the configuration information of the candidate cell 8 in the CPAC pre-configuration information, or removes the configuration information of the candidate cell 4, the configuration information of the candidate cell 6, and the configuration information of the candidate cell 8 in the CPAC pre-configuration information and records a cell identifier of the removed candidate cell 4, a cell identifier of the removed candidate cell 6, and a cell identifier of the removed candidate cell 8.

In this embodiment of this application, if configuration information of each candidate cell in the CPAC pre-configuration information is valid, the source network device determines that the CPAC pre-configuration information is valid and does not need to be updated. If not all of configuration information of all candidate cells in the CPAC pre-configuration information is valid, the source network device updates the CPAC pre-configuration information in the foregoing manner, to obtain the updated CPAC pre-configuration information.

S165: Send reply information, where the reply information includes the conditional PSCell addition/change pre-configuration information or the updated conditional PSCell addition/change pre-configuration information.

In this embodiment of this application, if the CPAC pre-configuration information does not need to be updated, the reply information includes the original CPAC pre-configuration information; or if the CPAC pre-configuration information needs to be updated, the reply information includes the updated CPAC pre-configuration information.

The reply information is carried in a terminal device context response message or another Xn interface message.

According to this application, if the terminal device still connects to this serving cell or a serving cell corresponding to the CPAC pre-configuration information next time, the terminal device may indicate to the network device and continue using the CPAC pre-configuration information, saving downlink signaling overheads, reducing interruption impact of state transition on data transmission and handover, and improving user experience.

For other specific implementation processes in this embodiment, refer to the foregoing content. Details are not described herein again.

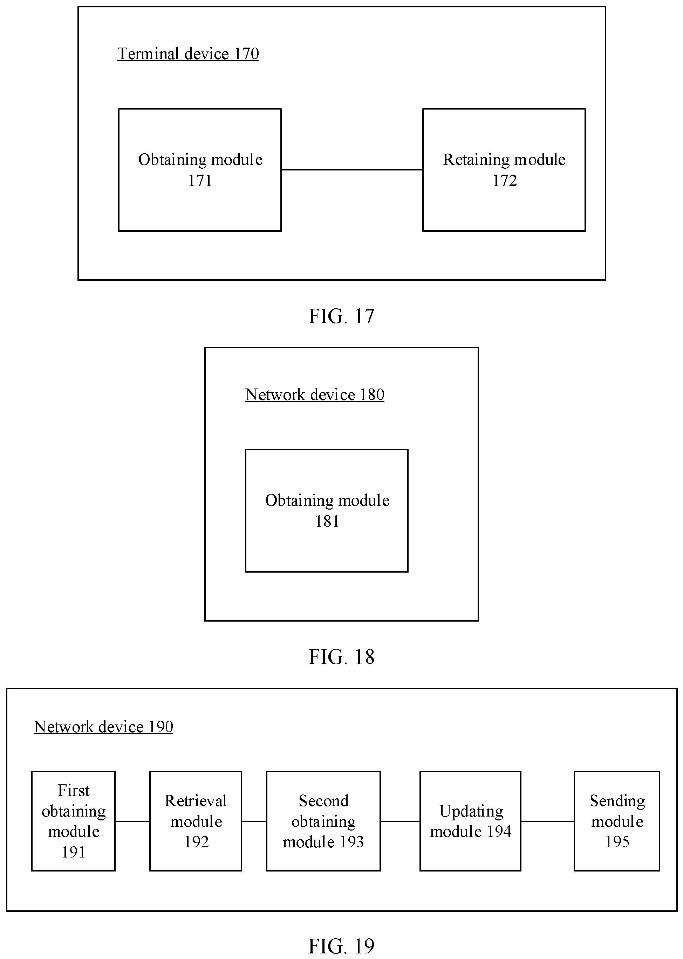

FIG. 17 is a diagram of a structure of a terminal device according to an embodiment of this application. As shown in FIG. 17, the terminal device 170 in this embodiment includes an obtaining module 171 and a retaining module 172, where:
the obtaining module 171 is configured to: obtain and save conditional PSCell addition/change pre-configuration information, and obtain indication information; and
the retaining module 172 is configured to: retain the conditional PSCell addition/change pre-configuration information based on the indication information when transitioning to a radio resource control inactive state.

In an optional embodiment, the indication information is carried in a radio resource control release message.

In an optional embodiment, the radio resource control release message carries at least one of a timer, a cell identifier of a valid cell, and a RAN-based notification area list of a valid area. The timer is configured to indicate a validity period for the conditional PSCell addition/change pre-configuration information. The cell identifier of the valid cell and the RAN-based notification area list of the valid area are both configured to indicate an applicable cell for the conditional PSCell addition/change pre-configuration information.

In an optional embodiment, the terminal device further includes a removal module, configured to: if the timer expires and/or the terminal device leaves a valid cell, remove the conditional PSCell addition/change pre-configuration information.

In an optional embodiment, the terminal device further includes a removal module, configured to: when transitioning to a radio resource control idle state, remove the conditional PSCell addition/change pre-configuration information.

In an optional embodiment, the conditional PSCell addition/change pre-configuration information includes at least one of air interface resources of a candidate cell, non-access stratum signaling, master cell group configuration information, secondary cell group configuration information, measurement configuration information, a dedicated system information block, or an encryption parameter.

In an optional embodiment, the terminal device further includes a sending module, configured to: send first information to a network device, where the first information indicates that the conditional PSCell addition/change pre-configuration information is usable.

In an optional embodiment, the first information includes a terminal device identifier and/or a candidate cell identifier. The candidate cell identifier is a cell identifier of a candidate cell in the conditional PSCell addition/change.

In an optional embodiment, the first information is carried in a radio resource control resume request message.

In an optional embodiment, the radio resource control resume request message further carries a measurement report.

In an optional embodiment, a first serving cell that is used when the conditional PSCell addition/change pre-configuration information is saved is the same as a second serving cell that is used when the first information is sent; or
a first serving cell that is used when the conditional PSCell addition/change pre-configuration information is saved is different from a second serving cell that is used when the first information is sent.

In an optional embodiment, the second serving cell is a candidate cell in the conditional PSCell addition/change pre-configuration information, and the sending module is specifically configured to: under a preset condition, apply the conditional PSCell addition/change pre-configuration information when sending the first information to the network device, where the preset condition includes that a current period is within the period specified by the timer, and/or the second serving cell is a valid cell.

In an optional embodiment, the obtaining module is further configured to obtain second information, where the second information indicates a processing manner for the conditional PSCell addition/change pre-configuration information; and the terminal device further includes a processing module, configured to: process the conditional PSCell addition/change pre-configuration information correspondingly based on the processing manner.

In an optional embodiment, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

The terminal device provided in this embodiment is configured to implement the technical solution for the terminal device in the foregoing method embodiment. Implementation principles and technical effects thereof are similar, and details are not described herein again.

FIG. 18 is a diagram of a structure of a network device according to an embodiment of this application. As shown in FIG. 18, the network device 180 in this embodiment includes an obtaining module 181, configured to: obtain first information, where the first information indicates that conditional PSCell addition/change pre-configuration information is usable.

In an optional embodiment, the first information is carried in a radio resource control resume request message.

In an optional embodiment, the first information includes a terminal device identifier and/or a candidate cell identifier. The candidate cell identifier is a cell identifier of a candidate cell in the conditional PSCell addition/change.

In an optional embodiment, the obtaining module is further configured to: obtain the conditional PSCell addition/change pre-configuration information based on the terminal device identifier and/or the candidate cell identifier; and the network device further includes a determining module, configured to: determine a processing manner for the conditional PSCell addition/change pre-configuration information, and indicate second information, where the second information indicates the processing manner for the conditional PSCell addition/change pre-configuration information.

In an optional embodiment, the obtaining module is specifically configured to obtain the conditional PSCell addition/change pre-configuration information from a source network device, where the source network device is a serving network device that configures a terminal device with the conditional PSCell addition/change configuration information.

In an optional embodiment, the determining module is specifically configured to: obtain resource usage of a second serving cell and resource usage of a neighboring cell of the second serving cell, where the second serving cell is a cell to which the terminal device currently connects; obtain a measurement report carried in the radio resource control resume request message; obtain whether the terminal device needs to be configured with a dual connectivity scenario; and determine the processing manner for the conditional PSCell addition/change pre-configuration information based on the resource usage, the measurement report, and whether the terminal device needs to be configured with the dual connectivity scenario.

In an optional embodiment, the processing manner includes one of retaining the conditional PSCell addition/change pre-configuration information, removing the conditional PSCell addition/change pre-configuration information, updating the conditional PSCell addition/change pre-configuration information, or adding conditional PSCell addition/change pre-configuration information.

The network device provided in this embodiment may be a core network device or an access network device, and is configured to implement the technical solution for the core network device or access network device in the foregoing method embodiments. Implementation principles and technical effects thereof are similar, and details are not described herein again.

FIG. 19 is a diagram of a structure of a network device according to an embodiment of this application. As shown in FIG. 19, the network device 190 in this embodiment includes:
a first obtaining module 191, configured to: obtain indication information, where the indication information includes a terminal device identifier and/or a candidate cell identifier;
a retrieval module 192, configured to: retrieve conditional PSCell addition/change pre-configuration information corresponding to the terminal device identifier and/or the candidate cell identifier;
a second obtaining module 193, configured to: obtain validity information regarding configuration information of a candidate cell in the conditional PSCell addition/change pre-configuration information;
an updating module 194, configured to: update the conditional PSCell addition/change pre-configuration information based on the validity information, to obtain updated conditional PSCell addition/change pre-configuration information; and
a sending module 195, configured to: send reply information, where the reply information includes the conditional PSCell addition/change pre-configuration information or the updated conditional PSCell addition/change pre-configuration information.

In an optional embodiment, the indication information is carried in a terminal device context request message or another Xn interface message.

In an optional embodiment, the reply information is carried in a terminal device context response message or another Xn interface message.

In an optional embodiment, the second obtaining module 193 is specifically configured to: send a first request message to another network device corresponding to a candidate cell, where the first request message is used to indicate to the another network device to determine validity information regarding configuration information of the candidate cell; and obtain the validity information sent by the another network device.

In an optional embodiment, the validity information includes at least one of a cell identifier of a candidate cell with valid configuration information, a cell identifier of a candidate cell with unusable configuration information, and a cell identifier of a candidate cell whose configuration information needs to be updated in the conditional PSCell addition/change pre-configuration information.

In an optional embodiment, the updating module is specifically configured to:
if the validity information indicates that configuration information of a candidate cell is unusable, remove the configuration information of the candidate cell in the conditional PSCell addition/change pre-configuration information;
if the validity information indicates that configuration information of a candidate cell is valid, continue retaining the configuration information of the candidate cell in the conditional PSCell addition/change pre-configuration information; and
if the validity information indicates that configuration information of a candidate cell needs to be updated, continue retaining the configuration information of the candidate cell in the conditional PSCell addition/change pre-configuration information, or remove the configuration information of the candidate cell in the conditional PSCell addition/change pre-configuration information.

In an optional embodiment, the updating module is further configured to: add pre-configuration information of a candidate cell to the conditional PSCell addition/change pre-configuration information based on a second serving cell and information about a neighboring cell of the second serving cell, where the second serving cell is a cell to which a terminal device currently connects.

The network device provided in this embodiment may be a core network device or an access network device, and is configured to implement the technical solution for the core network device or access network device in the foregoing method embodiments. Implementation principles and technical effects thereof are similar, and details are not described herein again.

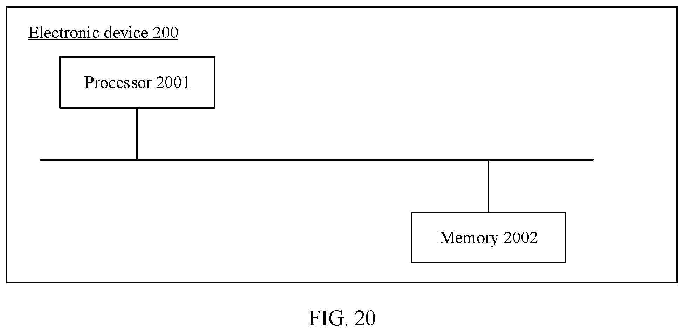

FIG. 20 is a diagram of a hardware structure of an electronic device according to an embodiment of this application. As shown in FIG. 20, the electronic device 200 includes a processor 2001 and a memory 2002. The memory 2002 stores computer-executable instructions. The processor 2001 executes the computer-executable instructions stored in the memory 2002, so that the electronic device performs the technical solutions in the foregoing method embodiments. Implementation principles and technical effects thereof are similar, and details are not described herein again.

An embodiment of this application further provides a computer-readable storage medium. The computer-readable storage medium stores a computer program. When the computer program is executed by a processor, the steps of the methods in the foregoing method embodiments are implemented.

An embodiment of this application provides a computer program product, including a computer program. When the computer program is run, a computer is enabled to perform the steps of the methods in the foregoing method embodiments.

All or some of the methods described in the foregoing embodiments may be implemented by software, hardware, firmware, or any combination thereof. If being implemented in software, functionality may be stored in or transmitted on computer-readable media as one or more instructions or code. The computer-readable media may include computer storage media and communication media, and may also include any medium capable of transferring a computer program from one place to another. The storage media may be any target medium accessible by computer.

In a possible implementation, the computer-readable media may include RAMs, ROMs, compact disc read-only memories (compact disc read-only memories, CD-ROMs) or other compact disc memories, magnetic disk memories or other magnetic storage devices, or any other media that are intended to carry required program code or store required program code in a form of instructions or a data structure and that are accessible by computer. In addition, any connection is appropriately referred to as a computer-readable medium. For example, if software is transmitted from websites, servers, or other remote sources by using coaxial cables, optical cables, twisted pairs, digital subscriber lines (Digital Subscriber Lines, DSLs), or wireless technologies (such as infrared, radio, and microwave), the coaxial cables, the optical cables, the twisted pairs the DSLs, or the wireless technologies such as infrared, radio, and microwave are included in definitions of the medium. Magnetic disks and compact discs used in this specification include compact discs, laser discs, optical discs, digital versatile discs (Digital Versatile Discs, DVDs), floppy disks, and Blu-ray discs. The magnetic disks typically reproduce data magnetically, whereas the compact discs reproduce data optically using lasers. The foregoing combinations should also be included in the scope of the computer-readable media.

An embodiment of this application provides a computer program product. The computer program product includes a computer program. When the computer program is run, a computer is enabled to perform the foregoing methods.

Embodiments of this application are described with reference to the flowcharts and/or block diagrams of the methods and devices (systems) according to embodiments of this application. It should be understood that computer program instructions may be used to implement each procedure and/or block in the flowcharts and/or block diagrams and a combination of procedures and/or blocks in the flowcharts and/or block diagrams. These computer program instructions may be provided to a general-purpose computer, a dedicated computer, an embedded processor, or a processing unit of another programmable device to generate a machine, so that the instructions executed by the computer or the processing unit of the another programmable data processing device generate an apparatus for implementing a function specified in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, and the like made based on the technical solutions in the present invention shall fall within the protection scope of the present invention.

## Claims

1. A wireless communication configuration method, comprising:
obtaining and saving conditional PSCell addition/change pre-configuration information;
obtaining indication information; and
retaining the conditional PSCell addition/change pre-configuration information based on the indication information when transitioning to a radio resource control inactive state.

2. The method according to claim 1, wherein the indication information is carried in a radio resource control release message.

3. The method according to claim 2, wherein the radio resource control release message carries at least one of a timer, a cell identifier of a valid cell, and a RAN-based notification area list of a valid area, wherein the timer is configured to indicate a validity period for the conditional PSCell addition/change pre-configuration information, and the cell identifier of the valid cell and the RAN-based notification area list of the valid area are both configured to indicate an applicable cell for the conditional PSCell addition/change pre-configuration information.

4. The method according to claim 3, further comprising: if the timer expires and/or the terminal device leaves a valid cell, removing the conditional PSCell addition/change pre-configuration information.

5. The method according to any one of claims 1 to 4, further comprising: when transitioning to a radio resource control idle state, removing the conditional PSCell addition/change pre-configuration information.

6. The method according to any one of claims 1 to 4, wherein the conditional PSCell addition/change pre-configuration information comprises at least one of air interface resources of a candidate cell, non-access stratum signaling, master cell group configuration information, secondary cell group configuration information, measurement configuration information, a dedicated system information block, or an encryption parameter.

7. The method according to claim 6, further comprising: sending first information to a network device, wherein the first information indicates that the conditional PSCell addition/change pre-configuration information is usable.

8. The method according to claim 7, wherein the first information comprises a terminal device identifier and/or a candidate cell identifier, wherein the candidate cell identifier is a cell identifier of a candidate cell in the conditional PSCell addition/change.

9. The method according to claim 7 or 8, wherein the first information is carried in a radio resource control resume request message.

10. The method according to claim 9, wherein the radio resource control resume request message further carries a measurement report.

11. The method according to claims 1 to 10, wherein the second serving cell is a candidate cell in the conditional PSCell addition/change pre-configuration information, and sending the first information to the network device comprises:
under a preset condition, applying the conditional PSCell addition/change pre-configuration information when sending the first information to the network device, wherein the preset condition comprises that a current period is within the period specified by the timer, and/or the second serving cell is a valid cell.

12. The method according to any one of claims 7 to 11, further comprising:
obtaining second information, wherein the second information indicates a processing manner for the conditional PSCell addition/change pre-configuration information; and
processing the conditional PSCell addition/change pre-configuration information correspondingly based on the processing manner.

13. The method according to claim 12, wherein the processing manner comprises one of retaining the conditional PSCell addition/change pre-configuration information, removing the conditional PSCell addition/change pre-configuration information, updating the conditional PSCell addition/change pre-configuration information, or adding the conditional PSCell addition/change pre-configuration information.

14. A wireless communication configuration method, comprising:
obtaining first information, wherein the first information indicates that conditional PSCell addition/change pre-configuration information is usable.

15. The method according to claim 14, wherein the first information is carried in a radio resource control resume request message.

16. The method according to claim 14 or 15, wherein the first information comprises a terminal device identifier and/or a candidate cell identifier, wherein the candidate cell identifier is a cell identifier of a candidate cell in the conditional PSCell addition/change.

17. The method according to claim 16, further comprising:
obtaining the conditional PSCell addition/change pre-configuration information based on the terminal device identifier and/or the candidate cell identifier; and
determining a processing manner for the conditional PSCell addition/change pre-configuration information, and indicating second information, wherein the second information indicates the processing manner for the conditional PSCell addition/change pre-configuration information.

18. The method according to claim 17, wherein obtaining the conditional PSCell addition/change pre-configuration information comprises: obtaining the conditional PSCell addition/change pre-configuration information from a source network device, wherein the source network device is a serving network device that configures the terminal device with the conditional PSCell addition/change configuration information.

19. The method according to claim 17 or 18, wherein determining the processing manner for the conditional PSCell addition/change pre-configuration information comprises:
obtaining resource usage of a second serving cell and resource usage of a neighboring cell of the second serving cell, wherein the second serving cell is a cell to which the terminal device currently connects;
obtaining a measurement report carried in the radio resource control resume request message;
obtaining whether the terminal device needs to be configured with a dual connectivity scenario; and
determining the processing manner for the conditional PSCell addition/change pre-configuration information based on the resource usage, the measurement report, and whether the terminal device needs to be configured with the dual connectivity scenario.

20. The method according to claim 17 or 18, wherein the processing manner comprises one of retaining the conditional PSCell addition/change pre-configuration information, removing the conditional PSCell addition/change pre-configuration information, updating the conditional PSCell addition/change pre-configuration information, or adding the conditional PSCell addition/change pre-configuration information.

21. A wireless communication configuration method, comprising:
obtaining indication information, wherein the indication information comprises a terminal device identifier and/or a candidate cell identifier;
retrieving conditional PSCell addition/change pre-configuration information corresponding to the terminal device identifier and/or the candidate cell identifier;
obtaining validity information regarding configuration information of a candidate cell in the conditional PSCell addition/change pre-configuration information;
updating the conditional PSCell addition/change pre-configuration information based on the validity information, to obtain updated conditional PSCell addition/change pre-configuration information; and
sending reply information, wherein the reply information comprises the conditional PSCell addition/change pre-configuration information or the updated conditional PSCell addition/change pre-configuration information.

22. The wireless communication configuration method according to claim 21, wherein the indication information is carried in a terminal device context request message or another Xn interface message.

23. The wireless communication configuration method according to claim 21 or 22, wherein the reply information is carried in a terminal device context response message or another Xn interface message.

24. The wireless communication configuration method according to any one of claims 21 to 23, wherein obtaining the validity information regarding the configuration information of the candidate cell in the conditional PSCell addition/change pre-configuration information comprises:
sending a first request message to another network device corresponding to a candidate cell, wherein the first request message is used to indicate to the another network device to determine validity information regarding configuration information of the candidate cell; and
obtaining the validity information sent by the another network device.

25. The wireless communication configuration method according to any one of claims 21 to 24, wherein the validity information comprises at least one of a cell identifier of a candidate cell with valid configuration information, a cell identifier of a candidate cell with unusable configuration information, and a cell identifier of a candidate cell whose configuration information needs to be updated in the conditional PSCell addition/change pre-configuration information.

26. The wireless communication configuration method according to claim 25, wherein updating the conditional PSCell addition/change pre-configuration information based on the validity information, to obtain the updated conditional PSCell addition/change pre-configuration information, comprises:
if the validity information indicates that configuration information of a candidate cell is unusable, removing the configuration information of the candidate cell in the conditional PSCell addition/change pre-configuration information;
if the validity information indicates that configuration information of a candidate cell is valid, continuing retaining the configuration information of the candidate cell in the conditional PSCell addition/change pre-configuration information; and
if the validity information indicates that configuration information of a candidate cell needs to be updated, continuing retaining the configuration information of the candidate cell in the conditional PSCell addition/change pre-configuration information, or removing the configuration information of the candidate cell in the conditional PSCell addition/change pre-configuration information.

27. The wireless communication configuration method according to any one of claims 21 to 26, further comprising:
adding pre-configuration information of a candidate cell to the conditional PSCell addition/change pre-configuration information based on the second serving cell and information about a neighboring cell of the second serving cell, wherein the second serving cell is a cell to which the terminal device currently connects.

28. An electronic device, comprising a processor and a memory, wherein
the memory stores computer-executable instructions; and
the processor executes the computer-executable instructions stored in the memory, so that the electronic device performs the method according to any one of claims 1 to 13, or the method according to any one of claims 14 to 20, or the method according to any one of claims 21 to 27.

29. A computer-readable storage medium, wherein the computer-readable storage medium stores a computer program, and when the computer program is executed by a processor, the method according to any one of claims 1 to 13 is implemented, or the electronic device is enabled to perform the method according to any one of claims 14 to 20, or the electronic device is enabled to perform the method according to any one of claims 21 to 27.

30. A computer program product, comprising a computer program, wherein when the computer program is run, a computer is enabled to perform the method according to any one of claims 1 to 13, or the electronic device is enabled to perform the method according to any one of claims 14 to 20, or the electronic device is enabled to perform the method according to any one of claims 21 to 27.
